# EUROPÄISCHE PATENTSCHRIFT

(11) **EP 1 900 122 B1**
(45) Veröffentlichungstag und Bekanntmachung des Hinweises auf die Patenterteilung: **05.11.2008**
(21) Anmeldenummer: 06743160.1
(22) Anmeldetag: 14.06.2006
(51) Int. Cl.: H04H 1/00

(54) **HYBRIDES RUNDFUNKSYSTEM MIT TERRESTRISCHEN UND SATELLITENGESTÜZTEN SENDESTATION ZUM SENDEN HIERARCHISCH MODULIERTER SIGNALE AN MOBILE EMPFÄNGER**
HYBRID BROADCASTING SYSTEM WITH TERRESTRIAL AND SATELLITE SUPPORTED TRANSMITTER STATIONS FOR THE TRANSMISSION OF HIERARCHICALLY MODULATED SIGNALS TO MOBILE RECEIVERS
SYSTEME DE RADIODIFFUSION HYBRIDE COMPRENANT UNE STATION EMETTRICE TERRESTRE ASSISTEE PAR SATELLITE POUR TRANSMETTRE DES SIGNAUX A MODULATION HIERARCHIQUE A DES RECEPTEURS MOBILES

(30) Priorität: 14.06.2005 DE 102005027453
(43) Veröffentlichungstag der Anmeldung: 19.03.2008
(73) Patentinhaber: Fraunhofer-Gesellschaft zur Förderung der angewandten Forschung e.V., 80686 München (DE)
(72) Erfinder: EBERLEIN, Ernst, 91091 Grossenseebach (DE); HEUBERGER, Albert, 91056 Erlangen (DE); BREILING, Marco, 91052 Erlangen (DE); LIPP, Stefan, 90427 Nuernberg (DE)
(74) Vertreter: Zinkler, Franz
(86) Internationale Anmeldenummer: PCT/EP2006/005746
(87) Internationale Veröffentlichungsnummer: WO 2006/133932

(56) Entgegenhaltungen:
- EP-A- 1 528 742
- US-A1- 2005 111 581
- US-A1- 2005 113 040
- US-A1- 2005 117 669
- US-B1- 6 741 834

## Beschreibung

Die vorliegende Erfindung bezieht sich im Allgemeinen auf eine terrestrische Sendestation zum Aussenden eines terrestrischen Rundfunksignals, auf ein satellitengestütztes Rundfunksystem und auf einen Empfänger für ein satellitengestütztes Rundfunksystem, im Speziellen auf eine terrestrische Sendestation zum Empfangen eines Satellitensignals und zum Aussenden eines Rundfunksignals mit hierarchischer Modulation sowie auch ein entsprechendes satellitengestütztes Rundfunksystem und einen zugehörigen Empfänger.

### Hintergrund

Satellitengestützte Systeme bieten die Möglichkeit einer großflächigen Versorgung. Damit kann der Service quasi überall verfügbar gemacht werden. Das ist insbesondere attraktiv für Rundfunkanwendungen oder großflächige Datenverteildienste. Satellitensystem eigenen sich insbesondere für Empfang mit direkt Sichtverbindung zum Satelliten ("Line-of-sight") und Mobilempfang im Auto. Für Empfänger im Haus und teilweise auch für Handheld-Anwendungen reicht oft die Feldstärke des Satellitensignals nicht aus. Um die Verfügbarkeit des Signals auch in Städten oder innerhalb von Gebäuden zu gewährleisten werden terrestrische Sender verwendet, die z.B. in dicht bebauten Gebieten das Signal dann mit deutlich höherer Feldstärke verfügbar machen.

Umgekehrt bieten terrestrische Systeme den Vorteil, dass in jeder Region eine unterschiedliche Information abgestrahlt wird und z.B. Daten abgestrahlt werden, die nur für eine Region relevant sind.

### Stand der Technik

### Systeme für digitalen Rundfunk

Eine Übersicht über die verschiedenen Systeme für den digitalen Rundfunk ist u.a. in folgenden Veröffentlichungen zu finden:
- ITU Recommendation BO 1130-4
- DSB Handbook - Terrestrial and satellite digital sound broadcasting to vehicular, portable and fixed receivers in the VHF/UHF bands, ITU 2002

Außerdem sind für die vorliegende Erfindung insbesondere folgende Systeme relevant
- DVB-T (ETSI Standard EN 300 744)
- S-DARS (XM Satellite Radio und Sirius Satellite Radio)

Lösungsansätze, die z.B. in Forschungsprojekten wie MAESTRO (CDMA basierte Lösung) verfolgt werden, sind für die vorliegende Erfindung ebenso relevant.

### Hierarchische Modulation

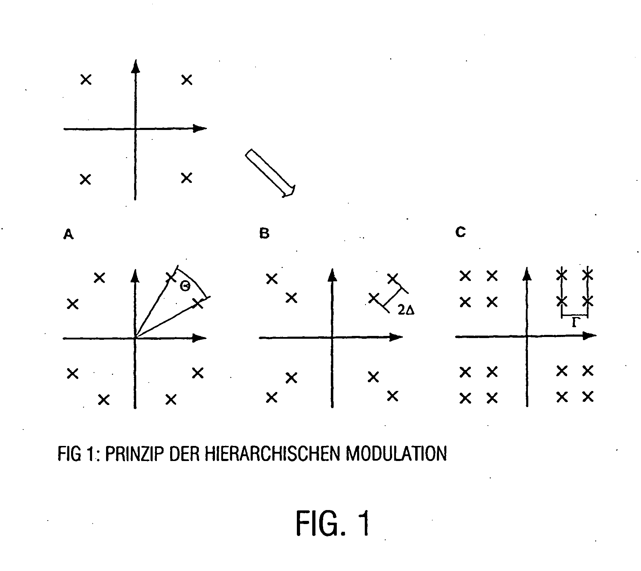

Standards wie z.B. DVB-T unterstützen hierarchische Modulation. Das Prinzip ist beispielhaft in Fig. 1 (Abbildung 1) dargestellt. Dargestellt sind die Konstellationsdiagramme von digital modulierten Signalen.

In der Grundkonfiguration ("base layer") werden z.B. 4 mögliche Zustände verwendet (obere Hälfte des Bildes, dargestellt ist eine QPSK = 4-QAM Konstellation). Dies entspricht 2bit pro Modulationssymbol.
In einer weiteren Ebene ("overlay layer"), die im folgenden auch als "Erweiterungsschicht" bezeichnet wird, werden diese Punkte nun in Unterpunkte aufgeteilt. Dabei sind Aufweitungen in die Phase (links, Fig. 1 "A"), Amplitude (Mitte, Fig. 1 "B") oder beides (rechts, Fig. 1 "C") denkbar.

Die dargestellten Konstellationsdiagramme stellen das Signal ohne Rauschen und andere Verzerrungen dar. Das Empfangssignal ist aber in der Regel stark mit Rauschen überlagert. Ein Empfänger, der nur den Baselayer, im folgenden auch als "Basisschicht" bezeichnet, verwendet, wertet nur die Information aus, "in welchen Quadranten liegt das Signal". Ein Empfänger der auch das Overlay-Signal, im weiteren auch als "Erweiterungssignal" bezeichnet, decodieren möchte, versucht auch die Punkte innerhalb eines Quadranten zu unterscheiden. Entsprechend der Stärke des Rauschsignals treten hier Entscheidungsfehler auf. Für das Overlay-Signal treten offensichtlich früher Entscheidungsfehler auf. Entsprechend ist der erforderliche Störabstand für das Overlay-Signal höher. Deshalb wird hierarchische Modulation bisher nur in Zusammenhang mit der Versorgungsplanung eingesetzt. Es können z.B. Signale, die eine kleinere Reichweite (kleineres Versorgungsgebiet) und Signale mit größerer Reichweite über den gleichen Sender abgestrahlt werden. Dieses Prinzip ist z.B. bei DVB-T umgesetzt. In ähnlicher Form kann auch damit erreicht werden, dass die besonders wichtige Information eine geringere Fehlerrate hat.

### Der ETSI-Standard-DVB-T

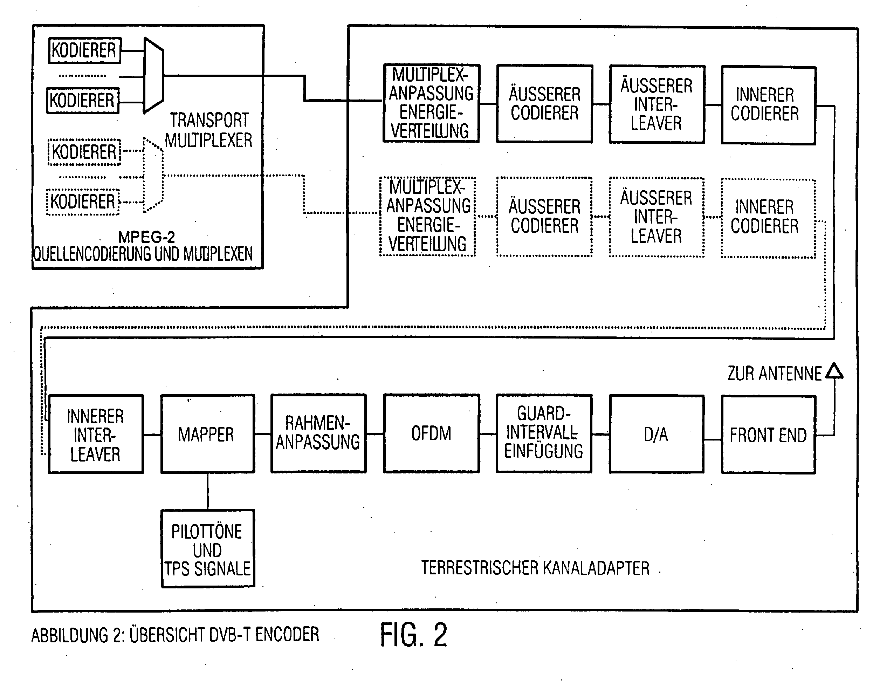

Das Prinzip der hierarchischen Codierung wird z.B. auch in dem ETSI Standard EN 300744 beschrieben. Fig. 2 (Abbildung 2) gibt eine Übersicht über den Sender. Der Sender enthält zwei Teile:
- Eine Datenquelle mit zugehörigen Source-Encodern (Für den DVB-T Standard sind das z.B. Audio- und Videoencoder wie sie im MPEG2 Standard beschrieben sind) und zugehörigen Multiplexern, so dass z.B. mehrere Programme über einen Sender abgestrahlt werden.
- Der eigentliche Sender ("Terrestrial Channel Adapter"), der den Fehlerschutz ("Outer Coder" und "Inner Coder") hinzufügt und die Modulation durchführt.

Der Terrestrial Channel Adapter des DVB-T Standards unterstützt bis zu zwei Eingänge. Über Eingang #1 wird ein "High Priority" (HP) Datenstrom angelegt. Diese Daten werden mit höherer Zuverlässigkeit übertragen. Über einen zweiten Eingang werden "Low Priority" (LP) Daten angelegt. Diese Daten werden mit geringerer Zuverlässigkeit übertragen. Dies drückt sich in durch eine geringere Reichweite aus, d.h. das Versorgungsgebiet der HP Daten ist größer.

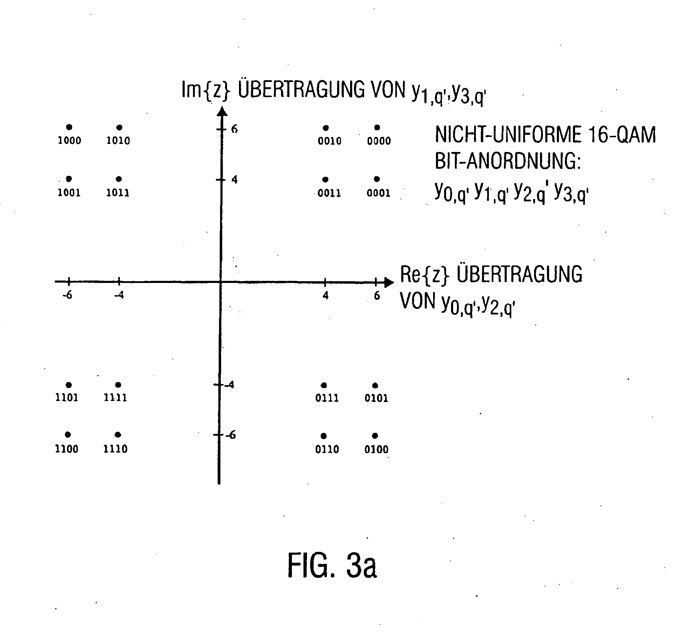

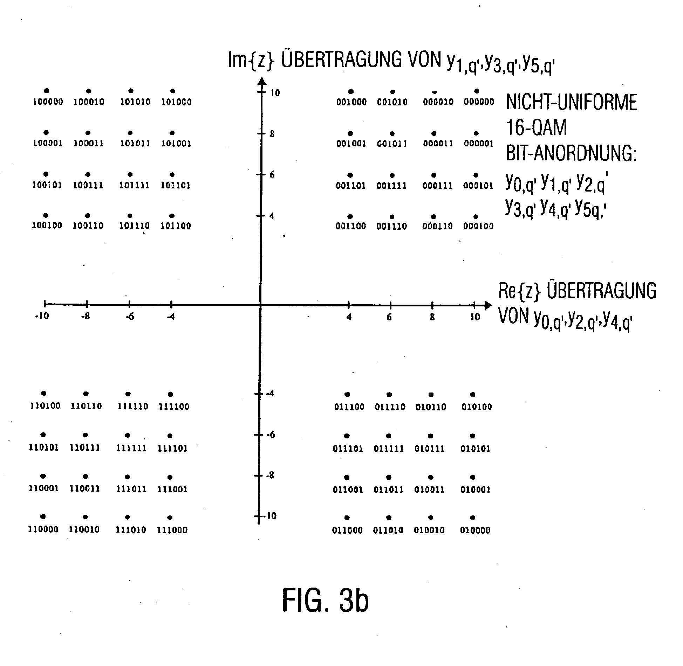

Die Fig. 3a und Fig. 3b zeigen Beispiele der Signalkonstellationen wie sie in dem DVB-T Standard festgelegt sind. Gezeigt ist eine non-uniform 16-QAM (Fig. 3a) und eine non-uniform 64-QAM Konstellation (Fig. 3b).

### Satelliten Systeme mit terrestrischer Unterstützung - Hybridsysteme

Hybrid-Systeme sind schon seit mindestens 15 Jahren in der Diskussion. Es sind folgende Grundkonzepte zu unterscheiden:
- Satellit dient überwiegend dazu, die terrestrischen Sender zu speisen. Ein Direktempfang des Satellitensignals ist nur möglich wenn ein Antenne mit einem hohen Antennengewinn (z.B. eine "Satellitenschüssel") installiert wird. Das terrestrische Signal kann dagegen auch mit sehr kleinen Antennen (wie sie z.B. bei Handheld-Geräten üblich sind) empfangen werden.
- Das Satellitensystem ist so ausgelegt, dass das Satellitensignal auch mit kleinen Antennen direkt empfangen werden kann. In diesen Fall werden dann nur noch terrestrische Füllsender ("Gap-Filler") benötigt, d.h. nur in Gebieten, in denen die Direktversorgung durch das Satellitensignal nicht ausreichend ist, wird ein terrestrischer Sender installiert. Da in Städten sehr viele Lücken in der Direktversorgung wären, werden in der Regel dann aber ganze Städte mit terrestrischen Sendernetzwerken versorgt und der Satellit übernimmt überwiegend die Versorgung für das flache Land, so dass z.B. beim Empfang im Auto eine kontinuierliche Verfügbarkeit gewährleistet wird wenn das Auto z.B. die Stadt verlässt.

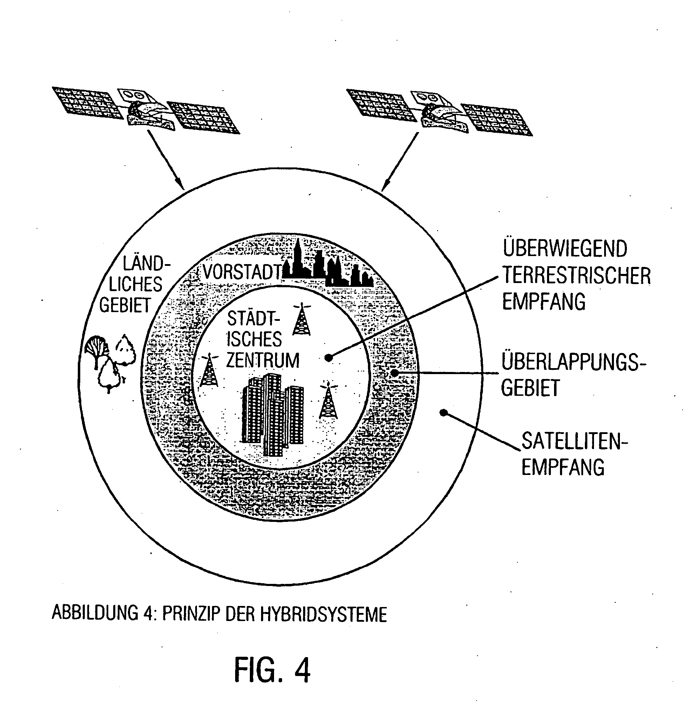

Das Grundprinzip der Hybridsysteme ist in Fig. 4 (Abbildung 4) dargestellt. Es sind dabei 3 Empfangsbereich (dargestellt als Ringe) zu unterscheiden.
- In Innenstädten, in denen terrestrische Sender installiert sind, ist die Feldstärke des terrestrischen Signals hoch im Vergleich zum Satellitensignal. Entsprechend dominiert hier der terrestrische Empfang
- In den ländlichen Gebieten ist entweder keinerlei terrestisches Signal vorhanden oder das Signal ist im Vergleich zum Satellitensignal sehr schwach. Entsprechend dominiert hier das Satellitensignal.
- In der Übergangszone sind beide Signale nutzbar. Wenn sich die Signale konstruktiv überlagern, wird dadurch die Versorgungsqualität erhöht.

### Optimierungsziele bei der Systemauslegung

Für die Dimensionierung eines Systems sind folgende Randbedingungen zu berücksichtigen:
- Bandbreiteneffizienz:
   Innerhalb einer gegebenen Bandbreite soll eine möglichst hohe Datenrate übertragen werden. Die Bandbreiteneffizienz wird in der Regel in "Anzahl der Bit pro Sekunde pro Hz Bandbreite" (bit/sec/Hz) angegeben.
- Leistungseffizienz:
   Die Leistungseffizienz beschreibt die erforderliche Sendenergie pro Informationseinheit. Die Leistungseffizienz wird in der Regel in E_{b}/N₀ (= Erforderliche Sendeenergie pro Nutzdatenbit in Bezug auf die Rauschleistungsdichte). Die Leistungseffizienz Insbesondere für das Satellitensignale von Bedeutung. Neben der erforderlichen abgestrahlten Sendeleistung ist auch der Wirkungsgrad des Senders von entscheidender Bedeutung.
- Einfluss von Mehrwegeausbreitung
- Realisierbarkeit des Empfängers, Kosten des Empfängers

### Mögliche Konfigurationen für Hybrid-System mit Direktempfang des Satellitensignals

### S-DARS Systeme (XM Satellite Radio, Sirius Satellite Radio)

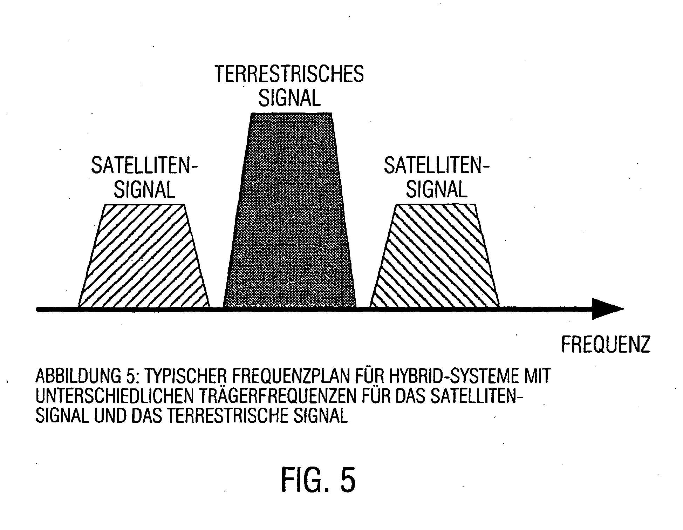

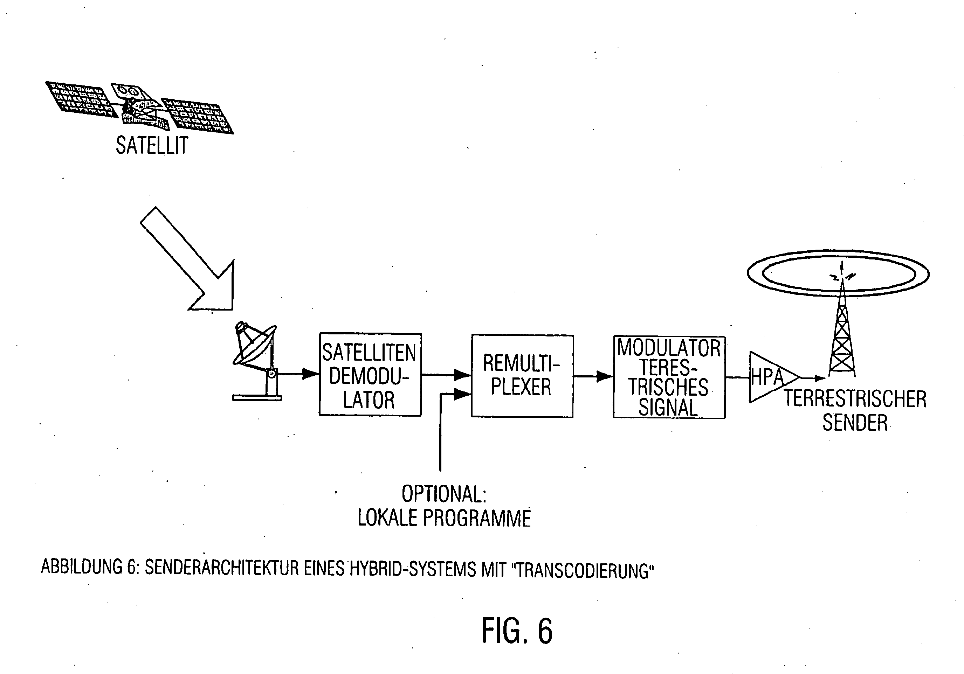

Die System-Architektur ist durch folgende Merkmale gekennzeichnet:
- Für das Satellitensignal und das terrestrische Signal werden unterschiedliche Trägerfrequenzen verwendet (siehe Fig. 5, Abbildung 5)
- Die terrestischen Sender setzen das Satellitensignal um ("Transcodierung"). Eine typische Architektur ist in Fig. 6 (Abbildung 6) dargestellt.

Da das terrestrische Signal weitgehend unabhängig vom Satellitensignal ist, sind folgende Konfigurationen möglich:
- Satellitensignal und terrestrisches Signal haben den gleichen Inhalt, d.h. es werden alle Satellitensignale auf ein terrestrisches Signal umgesetzt.
- Wenn die Kapazität des terrestrischen Signals größer ist, können z.B. Programme hinzugefügt werden.
- Es werden nur Teile vom Satellitensignal abgestrahlt. Z.B. können Programme weggelassen werden, die für eine Region kaum eine Bedeutung haben (z.B. Programme in anderen Sprachen).

### OFDM basierte Lösungen mit "Gap Fillern" (z.B. EU147 DAB System)

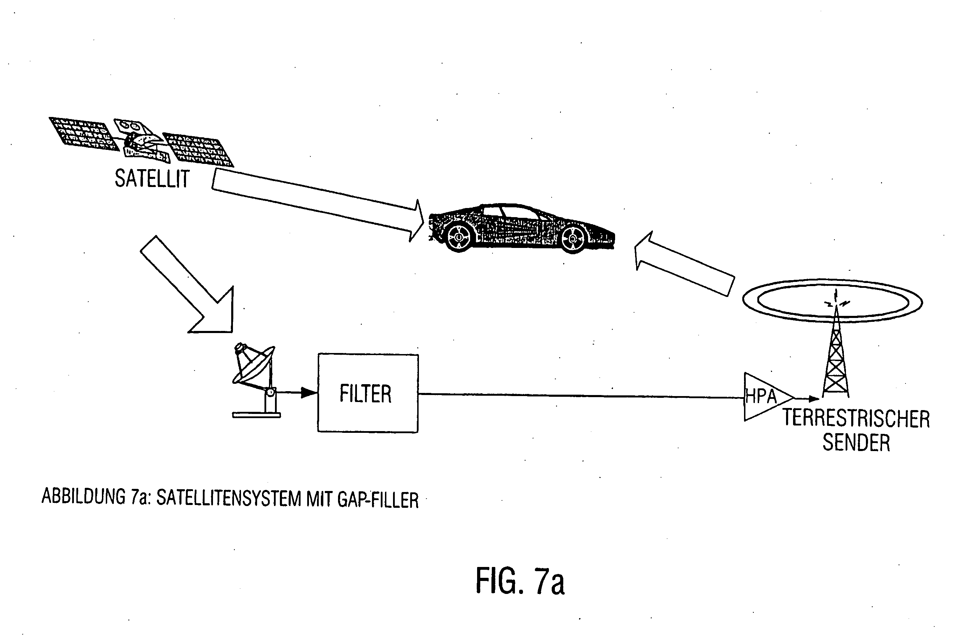

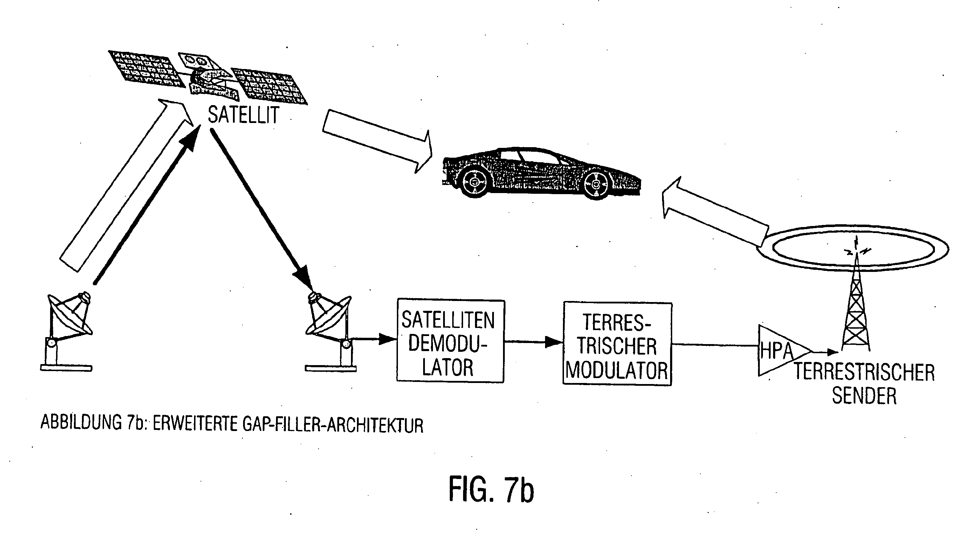

Für das Satellitensignal und das terrestrische Signal werden die gleichen Trägerfrequenzen verwendet. Die terrestrischen Sender ("Repeater" oder "Gap-Filler") strahlen das terrestrische Signal auf der gleichen Trägerfrequenz ab. Eine konstruktive Überlagerung ist nur dann gewährleistet, wenn das Satellitensignal und terrestrische Signal quasi identisch sind. Typische Systemkonfigurationen sind in Fig. 7a und Fig. 7b dargestellt. Bei einfachen "Gap-Fillern" wird das Satellitensignal über eine Satellitenantenne empfangen und verstärkt wieder abgestrahlt. Um eine bessere Entkopplung von Empfangs- und Sendeantenne zu erreichen (ohne gute Entkopplung könnte über Rückkopplungen das System schwingen) werden in der Regel Antennen mit guter Richtwirkung (z.B. "Satellitenschüsseln") und Filter eingesetzt.

Um diese Probleme zu vermeiden kann auch eine erweiterte Architektur wie in Fig. 7b gezeigt eingesetzt werden. Hier wird dem terrestrischen Sender das Signal auf getrennten Weg zugeführt. Z.B. kann ein zweiter Satellitentransponder verwendet werden. Für diese Zuspielung sind leistungsschwächere (= kostengünstigere) Transponder ausreichend.

In beiden Fällen sollten das Satellitensignal und das terrestrische Signal identisch sein, um eine konstruktive Überlagerung zu ermöglichen. Eine Einspeisung regionaler Inhalte würde dabei dazu führen, dass in der Übergangszone weder das terrestrische noch das Satellitensignal empfangbar wäre. Diese destruktive Überlagerung kann nur dann vermieden werden, wenn das Satellitensignal die verfügbare Kapazität nicht nutzt (z.B. in einzelnen Zeitschlitzen kein Signal übertragen wird).

### CDM

Für Systeme entsprechend Fig. 7a und Fig. 7b wird in der Regel OFDM Modulation verwendet. Im Prinzip sind ähnliche Konfigurationen auch mit Übertragungssystem denkbar, die CDM (Code Division Multiplex). Auch hier benutzen das Satellitensignal und das terrestrische Signal die gleiche Trägerfrequenz. Bei CDM werden die einzelnen Teilsignale (z.B. Programme) mit Spreizsequenzen orthogonal überlagert. Es ist also denkbar, dass einzelne terrestische Signale hinzugefügt werden, wenn für das Satellitensignal nicht alle Spreizsequenzen verwendet werden. Das bedeutet aber zugleich, dass terrestrische Signale nur dann ergänzt werden können, wenn das Satellitensignal die verfügbare Bandbreite relativ schlecht ausnutzt.

### Vergleichende Bewertung der beschriebenen Konfigurationen

Der S-DARS-Ansatz stellt einen sehr guten Kompromiss zwischen der Leistungseffizienz des Satellitensignals, der Bandbreiteneffizienz und der Receiverkomplexität dar. Der Empfänger muss in der Regel zwar mindestens zwei Demodulatoren (einer für das terrestrische und einer für das Satellitensignal) enthalten. Wenn die benutzten Trägerfrequenzen für das Satellitensignal und das terrestrische Signal aber sorgfältig gewählt sind, beschränkt sich das auf einen geringen Zusatzaufwand im Digitalteil des Empfängers und ist mit der modernen VLSI Technologie kostengünstig realisierbar. Ist dagegen mehr Flexibilität bei der Auswahl der Trägerfrequenzen notwendig, werden zwei RF-Tuner benötig, wodurch ggf. der Empfänger erheblich teuerer wird.

Die OFDM Lösung entsprechend dem EU147-Vorschlag bietet den Nachteil, dass
- die Gesamt-Leistungseffizienz gering ist
- lokale Information nur eingetastet werden kann, wenn das Satellitensignal die entsprechenden Teile des Multiplex nicht nutzt, d.h. die Bandbreiteneffizienz eingeschränkt wird.

Für den CDMA Ansatz ergibt sich folgende Situation:
- Eine hohe Leistungseffizienz für das Satellitensignal kann nur dann erhalten werden, werden, wenn lediglich ein Spreizcode verwendet wird. In diesen Fall ist dann aber die Bandbreiteneffizienz sehr schlecht.
- Verwendet das Satellitensignal bereits viele Spreizsequenzen, ergibt sich eine ähnliches Situation wie bei OFDM (schlechte Leistungseffizienz und lokale Information kann nur eingetastet werden, wenn die entsprechenden Teile für das Satellitensignal ungenutzt bleibt.

Die US 2005/0113040 A1 beschreibt ein Verfahren, einen Empfänger und einen Sender zur Verwendung in einem SDAR-System. Das Verfahren umfasst das Erzeugen eines ersten modulierten Signals, basierend auf ersten Eingangsdaten. Eine zusätzliche Modulation wird dem ersten modulierten Signal basierend auf zusätzlichen Eingangsdaten überlagert. Die zusätzliche Modulation wird über eine Mehrzahl von Symbolen in dem ersten modulierten Signal in einem vorgegeben Muster verteilt, um ein

Das modifizierte Signal wird dekodiert, indem eine erste Demodulation des ersten modulierten Signals erfolgt. Dann wird eine zusätzliche Demodulation ausgeführt, um zusätzliche Eingangsdaten zu erhalten. Der Schritt des Überlagerns verwendet eine Mehrzahl von Offset-Sequenz-Werten, um die zusätzliche Modulation zu dem ersten modulierten Signal zu addieren. Die Offset-Sequenz kann eine Pseudo-zufällige Verteilung von Offset-Sequenz-Werten sein, und kann ferner zumindest einen Wert mit einem Offset von Null umfassen. Das zusätzliche modulierte Signal kann auch als eine Modulation mit verteilten Spektrum gebildet sein, und die Offsetsequenz kann eine Pseudo-Rauschen-Verteilung sein.

Der ETSI-Standard ETSI EN 300 744 mit dem Titel "Digital Video Broadcasting (DVB); Framing structure, channel conding and modulation for digital terrestrial television" beschreibt in der Version 1.4.1 ein digitales Videorundfunksystem. Das System erlaubt eine zweistufige hierarchische Kanalcodierung und Modulation einschließlich einer gleichförmigen Konstellation und einer Konstellation mit verschiedenen Auflösungen. Die hierarchische Ordnung ist auf eine hierarchische Kanalcodierung und Modulation ohne die Verwendung einer hierarchischen Quellencodierung beschränkt. Ein Programmdienst kann daher gleichzeitig als eine robuste Version mit geringer Bitrate und eine weniger robuste Version mit hoher Bitrate übertragen werden. Alternativ können vollkommen verschiedene Programme aus verschiedenen Datenströmen mit unterschiedlicher Robustheit übertragen werden. Das genannte Dokument beschreibt ferner im Detail eine Kanalcodierung und Modulation. So kann beispielsweise einen hierarchische 16-QAM-Modulation und eine hierarchische 64-QAM-Modulation eingesetzt werden.

Der Artikel "Technical Advances in Digital Audio Radio Broadcsting" von T. Faller und anderen, veröffentlicht in den Proceedings of the IEEE, Vol. 90, No. 8, August 2002, Seiten 1303-1333, liefert einen Überblick über verschiedene digitale Rundfunksysteme einschließlich der verwendeten Quellcodierung, Kanalcodierung und Modulation. Ferner liefert der genannte Artikel Hintergrundinformationen zu zugrundeliegenden Systemstrukturen sowie weitere Details im Hinblick auf eine senderseitige und empfängerseitige Signalaufbereitung.

Der Vortrag "DVB-T mit hierarchischer Modulation" von A. Schertz und C. Weck, veröffentlich auf dem technischwissenschaftlichen Kolloquium des Instituts für Rundfunktechnik am 19. April 2004, beschreibt das Prinzip der hierarchischen Modulation bei dem DVB-T-Rundfunksystem. Der genannte Vortrag beschäftigt sich beispielsweise mit dem Frequenzspektrum einer DVB-T-Aussendung, der verwendeten Modulation sowie verschiedenen Vorkehrungen beim Einsatz einer hierarchischen Modulation. Ferner beschreibt der Vortrag die Verwendung eines unterschiedlichen Fehlerschutzes für einen Datenstrom hoher Priorität sowie einen Datenstrom mit niedriger Priorität. Ferner gibt der genannte Vortrag konkrete Beispiele für verschiedene Versorgungssituationen, wobei eine uniforme Modulation mit einer hierarchischen Modulation verglichen wird.

Die EP 1 528 742 A2 beschreibt ein Verfahren und eine Vorrichtung zur Bereitstellung einer Signal-Akquisition und einer Rahmensynchronisation in einem hierarchischen Modulationsschema. Dabei wird ein Konzept beschrieben, das eine Signalakquisition und eine Rahmensynchronisation in einem digitalen Rundfunksystem unter Verwendung von Paritätsprüfcodes niedriger Dichte unterstützt. Eine hierarchische Modulation wird verwendet, um eine Rückwärtskompatibilität zu gewährleisten, wodurch das Signal der unteren Schicht unter Verwendung einer Codierung mit einer Paritätsüberprüfung geringer Dichte (LDPC-Codierung) kodiert wird. Es wird ein Signal empfangen, das gemäß dem hierarchischen Modulationsschema normiert ist, wobei das hierarchische Modulationsschema eine obere Schicht und eine untere Schicht umfasst. Das Signal umfasst ein Datenmuster und einen kodierten Rahmen. Die Abhängigkeit des empfangenen Signals von der Modulation der oberen Schicht wird entfernt. Das Signal mit der entfernten Modulation wird mit mehreren vorbestimmten Datenmustern korreliert, um das Datenmuster des Signals zu bestimmen. Eine Coderate des codierten Rahmens wird basierend auf dem bestimmten Datenmuster ermittelt.

Die US 6,741,834 B1 beschreibt eine Vorrichtung und ein Verfahren zur Verbesserung einer integrierten Präsentation von existierenden Radiodiensten und fortgeschrittenen Multimediadiensten. Das beschriebene Konzept erlaubt die Bereitstellung einer integrierten Präsentation von existierenden Medienprogrammdiensten und sekundären Medienprogrammdiensten. Das Verfahren umfasst ein Akzeptieren einer Auswahl eines sekundären Medienprogramms, das auf einem sekundären Medienprogrammkanal übertragen wird. Das Verfahren umfasst ferner ein Zugreifen auf eine Abbildung, um einen primären Medienkanal zu bestimmen, der dem ausgewählten sekundären Medienprogrammkanal zugeordnet ist. Ferner umfasst das Verfahren ein Anweisen eines ersten Tuner-Moduls, eine bedingte Zugriffsinformation zu empfangen, die dem primären Medienkanal von dem primären Dienstanbieter zugeordnet ist. Die bedingte Zugriffsinformation wird dann ausgewertet, um zu bestimmen, ob ein zweiter Tuner autorisiert ist, den sekundären Medienprogrammkanal zu empfangen. Das Verfahren umfasst ferner ein Anweisen des zweiten Tunermoduls, das sekundäre Medienprogramm zu empfangen, falls der zweite Tuner autorisiert ist, den sekundären Medienprogrammkanal zu empfangen.

Die US 2005/0113040 A1 beschreibt ein Verfahren zur Minimierung eines Kompatibilitätsfehlers bei einer hierarchischen Modulation unter Verwendung einer variablen Phase. Die genannte Schrift beschreibt ein Verfahren, einen Empfänger und einen Sender zur Verwendung in einem SDAR-System. Das Verfahren umfasst ein Erzeugen eines ersten modulierten Signals basierend auf ersten Eingangsdaten. Zusätzliche Modulation wird dem ersten modulierten Signal basierend auf zusätzlichen Eingangsdaten überlagert. Die zusätzlichen Eingangsdaten werden über eine Mehrzahl von Symbolen in dem ersten modulierten Signal in einem vorbestimmten Muster verteilt, um ein modifiziertes Signal zu erzeugen, welches dann ausgesendet wird. Das modifizierte Signal wird decodiert, indem eine erste Demodulation des ersten modulierten Signals und erst dann eine zusätzliche Demodulation ausgeführt wird, um zusätzliche Eingangsdaten zu erhalten.

Der Schritt des Überlagerns verwendet eine Mehrzahl von Offset-Sequenz-Werten, um zusätzliche Modulation zu dem ersten modulierten Signal hinzuzufügen. Die Offset-Sequenz kann als eine pseudo-zufällige Verteilung von Offset-Sequenz-Werten erscheinen und kann zumindest einen Null-Offset-Wert umfassen. Alternativ kann das zusätzliche modulierte Signal unter Verwendung einer Spreiz-Spektrum-Modulation erzeugt werden. Die Offset-Sequenz kann dabei als Pseudo-Rausch-Verteilung erscheinen.

Die US 2005/0111581 A1 beschreibt ein Verfahren zum Einfügen von hierarchischen Daten in einen einzelnen Trägerstrom. Die genannte Schrift beschreibt einen Sender von zwei Pegeln von Daten in einem hierarchischen Übertragungssystem. Der Sender umfasst einen Codierer, einen Modulator, einen Einsteller und einen Konverter. Der erste Codierer hat einen ersten Ausgang und ist in der Lage, digitale Informationen basierend auf ersten Daten an dem ersten Ausgang bereitzustellen. Der zweite Codierer hat einen zweiten Ausgang und ist in der Lage, digitale Informationen basierend auf zweiten Daten an dem zweiten Ausgang bereitzustellen. Der Modulator ist mit dem ersten Codierer gekoppelt und hat I- und Q-Ausgänge. Der Einsteller ist mit dem Modulator und dem zweiten Codierer gekoppelt und modifiziert Signale auf den I- und Q-Ausgängen des Modulators, um Übertragungs-I- und Übertragungs-Q-Ausgangssignale zu erzeugen. Der Konverter ist mit dem Einsteller gekoppelt und ist in der Lage, Rundfunkradio-Signale basierend auf den Übertragungs-I- und Übertragungs-Q-Ausgangssignalen zu senden.

Die US 2005/0117669 A1 beschreibt ein Verfahren zur Vergrößerung einer Leistungsfähigkeit von sekundären Daten in einem hierarchischen Modulations-Schema. Die genannte Schrift beschreibt einen Empfänger zur Verwendung in einem SDAR-System. Der Empfänger umfasst eine Empfangseinheit mit Satellitensignal-Detektionseinrichtungen zum Detektieren eines Sendesignals, das von einem Satelliten gesendet wird. Das Sendesignal wird erzeugt, wenn der Sender einen primären Datenstrom auf eine Trägerwelle, die dem Satelliten zugeordnet ist, moduliert. Zumindest einer der Demodulatoren ist mit der Empfangseinheit gekoppelt und ausgelegt, um das Sendesignal zu demodulieren.

### Erfindung

Allgemein gesprochen ist es somit Ziel der vorliegenden Erfindung, die Vorteile der terrestrischen und satellitengestützten Systeme effizient zu vereinen.

Es ist also die Aufgabe der vorliegenden Erfindung, ein Konzept zur flexiblen Rundfunkversorgung eines Versorgungsgebiets zu schaffen.

Diese Aufgabe wird durch ein Rundfunksystem gemäß Anspruch 1 oder 11 gelöst.

Die vorliegende Erfindung schafft eine terrestrische Sendestation zum Aussenden eines terrestrischen Rundfunksignals mit einem ersten Empfänger zum Empfangen eines ersten Signals, um ein erstes-Empfangssignal zu erhalten, und einem zweiten Empfänger zum Empfangen eines lokalen Signals, um ein Lokal-Empfangssignal zu erhalten. Die terrestrische Sendestation umfasst ferner einen Signalkombinierer zum Kombinieren des ersten-Empfangssignäls mit dem Lokal-Empfangssignal, um ein Kombinationssignal zu bilden, wobei der Signalkombinierer ausgebildet ist, um das Kombinationssignal so zu erzeugen, dass das Kombinationssignal gemäß einer hierarchischen Modulation gebildet ist, wobei das erste Empfangssignal in einer Basisschicht der hierarchischen Modulation enthalten ist, und wobei das Lokal-Empfangssignal in einer Erweiterungsschicht der hierarchischen Modulation enthalten ist. Die erfindungsgemäße terrestrische Sendestation umfasst ferner einen Sender zum Aussenden des Kombinationssignals.

Es ist die Grundidee der vorliegenden Erfindung, dass es vorteilhaft ist, in einer terrestrischen Sendestation ein Satelliten-Empfangssignal bzw. erstes Empfangssignal, das ein erster Empfänger aufgrund eines großflächig ausgestrahlten Signals bzw. Satellitensignals erzeugt, und ein lokales Empfangssignal, das ein zweiter Empfänger aufgrund eines lokalen Signals erzeugt, in einem Signalkombinierer so zu kombinieren, dass ein Kombinationssignal entsteht, das gemäß einer hierarchischen Modulation gebildet ist, und bei dem das Satelliten-Empfangssignal in einer Basisschicht der hierarchischen Modulation enthalten ist, und bei dem das Lokal-Empfangssignal in einer Erweiterungsschicht der hierarchischen Modulation enthalten ist.

Es wird darauf hingewiesen, dass im Folgenden des Ausdruck Satelliten-Empfangssignal beispielhaft verwendet wird, um ein großflächig ausgestrahltes Signal zu bezeichnen. Die erfindungsgemäßen Vorteilen lassen sich nämlich bei jeder Art von großflächig ausgestrahlten Signalen erzielen. Das großflächig ausgestrahlte Signal wird im folgenden auch als erstes Signal bezeichnet und kann beispielsweise durch ein Gleichwellennetz ausgestrahlt werden. Hierbei kann eine terrestrische Sendestation eine lokale Information ausstrahlen.

Die vorliegende Erfindung ist dahingehend vorteilhaft, dass sie ein terrestrisches Rundfunksignal liefert, das zumindest teilweise auf einem Satellitensignal basiert. Ferner werden erfindungsgemäß die Vorteile von satellitengestützten Systemen und terrestrischen Systemen verbunden und eine Abstrahlung eines terrestrischen Rundfunksignals ermöglicht, das gegenüber dem Satellitensignal um lokale Programme ergänzt ist, ohne dass starke Interferenzen zwischen den Satellitensignal und dem terrestrisch abgestrahlten Signal entstehen, wobei dennoch eine ausreichende Bandbreiteneffizienz und Leistungseffizienz erzielt werden.

Es hat sich nämlich gemäß dem Kerngedanken der vorliegenden Erfindung gezeigt, dass Störungen zwischen dem Satellitensignal und dem Kombinationssignal sowie zwischen Kombinationssignalen von mehreren terrestrischen Sendestationen dadurch minimiert werden können, dass das Satellitensignal in der Basisschicht der hierarchischen Modulation übertragen wird, während das Lokal-Empfangssignal, das der zweite Empfänger dezentral empfängt, in der Erweiterungsschicht der hierarchischen Modulation enthalten ist. Die Basisschicht der hierarchischen Modulation bestimmt nämlich eine grobe Lage eines Modulationssymbols in einem Konstellationsdiagramm, während gemäß der Erweiterungsschicht die grobe Lage eines Modulationssymbols in dem Konstellationsdiagramm nur noch geringfügig verändert wird. Mit anderen Worten, die Basisschicht der hierarchischen Modulation enthält eine größere Energie als die Erweiterungsschicht und kann somit an einem gegebenen Ort ein größeres Signal-zu-Rausch-Verhältnis hervorrufen als die Erweiterungsschicht. Im übrigen ist der Einsatz einer Mehrzahl von gleichartigen erfindungsgemäßen terrestrischen Sendestationen in unmittelbarer räumlicher Nachbarschaft ohne eine gravierende gegenseitige Störbeeinflussung möglich. Zwei räumlich benachbarte terrestrische Sendestationen empfangen nämlich typischerweise das gleiche Satellitensignal, aber verschiedene lokale Signale. Die beiden terrestrischen Sendestationen strahlen dann zwei Kombinationssignale aus, deren Modulationsinhalt in der Basisschicht gleich ist. Die Modulationsinhalte der Erweiterungsschicht der von den beiden betrachteten terrestrischen Sendestationen ausgestrahlten Kombinationssignalen können sich freilich in Abhängigkeit von den jeweiligen lokalen Signalen unterscheiden. Allerdings ist festzuhalten, dass aufgrund der Tatsache, dass die beiden terrestrischen Sendestationen Kombinationssignale mit gleichem Inhalt in der Basisschicht aussenden, bezüglich der Basisschicht keine störende Überlagerung, sondern im Gegenteil eine konstruktive Überlagerung der von beiden Sendestationen ausgesandten Kombinationssignale entsteht. Somit ist der Modulationsinhalt der Basisschicht der hierarchischen Modulation, der bei beiden betrachteten Sendestationen gleich ist, an jedem Ort ohne eine störende Überlagerung, die die Signaleigenschaften verschlechtern könnte, empfangbar.

Damit ist die Information des lokalen Signals der Information des Satellitensignals lediglich als ein Zusatzsignal überlagert, das den Empfang der in der Basisschicht der hierarchischen Modulation enthaltenen Information nicht beeinflusst. Im übrigen beeinträchtigt selbst das Vorhandensein von mehreren Kombinationssignalen, die in der Basisschicht der hierarchischen Modulation die gleiche Information enthalten, den Empfang der in der Basissicht enthaltenen Informationen nicht, auch wenn die in den Zusatzschichten der hierarchischen Modulation der beiden Kombinationssignale enthaltene Informationen unterschiedlich sind.

Eine erfindungsgemäße terrestrische Sendestation ermöglicht somit in vorteilhafter Weise eine Aussendung des terrestrischen Rundfunksignals, das sowohl eine in einem globalen bzw. überregional empfangbaren Satellitensignal enthaltene Information als auch eine in einem lokalen Signal enthaltene Information umfassen kann. Die in dem Satellitensignal enthaltene globale Information ist Störungen zwischen benachbarten terrestrischen Sendestationen nicht unterworfen. Auch eine störende Interferenz mit einem Satellitensignal, dessen Basisschicht-Information gleich der Basisschicht-Information des Kombinationssignals ist, tritt bei einer erfindungsgemäßen Sendestation nicht auf.

Somit ist es möglich, mehrere terrestrische Sendestationen ohne weiteren Abgleich und unter Verwendung von gleichen Trägerfrequenzen für die abgestrahlten Kombinationssignale zu betreiben, ohne dass der Modulationsinhalt in der Basisschicht gestört ist. Damit ist auch der ungeplante (ad-hoc-) Betrieb von mehreren terrestrischen Sendestationen möglich, ohne dass die in dem Satellitensignal enthaltene Information dadurch in störender Weise beeinträchtigt wird. Somit kann eine erfindungsgemäße terrestrische Sendestation auch als kostengünstiges und zulassungsfreies Endverbraucher-Produkt bereitgestellt werden.

Bei einem bevorzugten Ausführungsbeispiel ist der erste Empfänger ein Satelliten-Empfänger, der ausgebildet ist, um das Satellitensignal von einem Satelliten zu empfangen. Weiterhin wird es bevorzugt, dass der zweite Empfänger von dem ersten Empfänger verschieden ist. Der erste Empfänger kann bevorzugter Weise eine Wiedereingabeeinrichtung für ein analoges Medium, eine Wiedergabeeinrichtung für ein digitales Medium, ein programmierbarer Computer, der konfiguriert ist, um eine digital codierte Nachricht zur Verbreitung über das terrestrische Rundfunksignal zu erzeugen, oder ein Empfänger für ein terrestrisches Funksignal sein. Ferner kann der zweite Empfänger auch ein Empfänger für ein optisches Signal (z.B. von einem Laser oder einem Lichtwellenleiter) oder ein Empfänger für ein drahtgebundenes Signal sein. Es wird hierbei bevorzugt, dass der zweite Empfänger eine lokale Information liefert, die sich von dem Satelliten-Empfangssignal unterscheidet. In diesem Falle kommen die Vorteile einer erfindungsgemäßen Sendestation voll zur Geltung.

Weiterhin wird es bevorzugt, dass der zweite Empfänger einen Quellencodierer umfasst, der ausgelegt ist, um das lokale Signal quellenzucodieren, um das Lokal-Empfangssignal zu erhalten. Durch eine Quellencodierung kann beispielsweise erreicht werden, dass die Datenrate des lokalen Signals hinreichend gering wird, so dass eine Übertragung in der Erweiterungsschicht der hierarchischen Modulation möglich wird. Die Erweiterungsschicht der hierarchischen Modulation kann nämlich prinzipbedingt nur eine deutlich geringere Datenrate übertragen als die Basisschicht der hierarchischen Modulation. Dies liegt daran, dass die in der Erweiterungsschicht enthaltene Energie pro Datensymbol wesentlich kleiner ist als die in der Basisschicht der hierarchischen Modulation enthaltene Energie pro Datensymbol.

Weiterhin wird es bevorzugt, dass der zweite Empfänger eine Kanalcodierungseinrichtung zum Kanalcodieren des lokalen Signals aufweist, die ausgelegt ist, um das lokale Signal auf eine vorgegebene Coderate zu codieren oder umzucodieren, so dass das quellencodierte Lokal-Empfangssignal entsteht. Die Verwendung einer wirkungsvollen Kanalcodierung für das Lokal-Empfangssignal ist sehr wichtig, da das Lokal-Empfangssignal in der Erweiterungsschicht der hierarchischen Modulation übertragen wird. Wie schon erwähnt, ist die Signalenergie pro Datensymbol für die in der Erweiterungsschicht der hierarchischen Modulation übertragene Information deutlich kleiner als die Signalenergie pro Datensymbol für die in der Basisschicht der hierarchischen Modulation übertragene Information. Um die unterschiedlichen Energien der in der Erweiterungsschicht der hierarchischen Modulation und der Basisschicht der hierarchischen Modulation übertragenen Informationen auszugleichen, ist es vorteilhaft, bei der in der Erweiterungsschicht der hierarchischen Modulation übertragene Information (also dem Lokal-Empfangssignal) eine wirkungsvolle die Fehlerkorrektur im Empfänger hilfreiche Redundanz hinzuzufügen. Damit wird erzielt, dass das in der Erweiterungsschicht der hierarchischen Modulation übertragene Lokal-Empfangssignal mit näherungsweise der gleichen Zuverlässigkeit bzw. Bitfehlerrate (nach Kanal-Decodierung) übertragen werden kann wie das in der Basisschicht übertragene Satellitensignal. Somit wird also, im Gegensatz zu herkömmlichen Systemen, erreicht, dass das Satelliten-Empfangssignal und das Lokal-Empfangssignal von der terrestrischen Sendestation mit einer hierarchischen Modulation übertragen werden können, wobei dennoch eine gleiche oder näherungsweise gleiche Reichweite für das in dem Kombinationssignal enthaltene Satellitensignal und das in dem Kombinationssignal enthaltene lokale Signal erreicht werden kann.

Es wird im Übrigen darauf hingewiesen, dass auch das Satellitensignal bevorzugter Weise eine Kanalcodierung aufweist. Typischen Coderaten liegen im Bereich von 0.5. Die Coderate des Lokal-Empfangssignals ist hingegen typischerweise viel kleiner (typisch z.B. 0,2).

Bei dem bevorzugten Ausführungsbeispiel ist der Signalkombinierer ausgelegt, um das Lokal-Empfangssignal dem Satelliten-Empfangssignal hinzuzufügen, indem der Signalkombinierer den Satelliten-Empfangssignal ein Erweiterungssignal überlagert, das abhängig von einem Datensymbol des Lokal-Empfangssignals ist. Hierbei ist es möglich, dass das Erweiterungssignal ferner auch noch von einem Datensymbol des Satelliten-Empfangssignals abhängig ist. Somit kann durch Überlagerung zweier Signale das Kombinationssignal erzeugt werden, ohne dass das Satelliten-Empfangssignal erst in ein digitales Signal rückgewandelt werden muss, um das Kombinationssignal zu erzeugen. Außerdem, liegen in diesem Fall das Satelliten-Empfangssignal, das die Basisschicht der hierarchischen Modulation bildet, und das Erweiterungssignal, das den Übergang von der Basisschicht zu der Erweiterungsschicht der hierarchischen Modulation beschreibt, in getrennter Form vor und können somit besonders vorteilhaft getrennt bearbeitet werden.

Es wird im Übrigen bevorzugt, dass der Signalkombinierer so ausgelegt ist, dass das Erweiterungssignal typischerweise um mindestens 6 Dezibel schwächer als das Satelliten-Empfangssignal. Bevorzugter Weise ist das Erweiterungssignal sogar um mindestens 10 Dezibel schwächer als das Satelliten-Empfangssignal. Dadurch wird erreicht, dass das Erweiterungssignal hinreichend klein ist, um Störungen mit Signalen von benachbarten Sendestationen, die das gleiche Satelliten-Empfangssignal, aber ein anderes Lokal-Empfangssignal verwenden, zu minimieren.

Bei einem weiteren bevorzugten Ausführungsbeispiel umfasst der erste Empfänger einen Demodulator, der ausgelegt ist, um das Satelliten-Empfangssignal zu demodulieren und um eine Darstellung des Satelliten-Empfangssignals in Form von codierten Datensymbolen des Satelliten-Empfangssignals zu erhalten. Der Signalkombinierer umfasst bevorzugt einen Bitstrom-Kombinierer, der ausgelegt ist, um die codierten Datensymbole des Satelliten-Empfangssignals mit codierten Datensymbolen des Lokal-Empfangssignals zu kombinieren, um kombinierte Datensymbole zu erhalten. Der Signalkombinierer umfasst bei diesem Ausführungsbeispiel ferner eine Mapper, der ausgelegt ist, um die kombinierten Datensymbole unter Verwendung der Information eines Konstellationsdiagramms, das die Erweiterungsschicht der hierarchischen Modulationen beschreibt, auf Modulationssymbole abzubilden. Basierend auf den Modulationssymbolen kann dann durch einen geeigneten Modulator (der beispielsweise ein Teil des Senders sein kann) das modulierte Kombinationssignal erzeugt werden. Der Bitstrom-Kombinierer und der Mapper sind bevorzugter Weise so angepasst, dass die Basisschicht der digitalen Modulation für eine Übertragung einer in dem Satelliten-Empfangssignal (z.B. in Form von codierten Datensymbolen) enthaltene Information verwendet wird, und dass die Erweiterungsschicht der digitalen Modulation für eine Übertragung einer in dem Lokal-Empfangssignal (z.B. in Form von codierten Datensymbolen) enthaltene Information verwendet wird. In anderen Worten, Bitdaten des Satelliten-Empfangssignals und des Lokal-Empfangssignals werden zu kombinierten Datensymbolen kombiniert, die dann durch den Mapper auf Modulationssymbole abgebildet werden. Das Satelliten-Empfangssignal beschreibt hierbei die Basisschicht, also die "grobe" Lage eines Modulationssymbols in einem Konstellationsdiagramm. Das Lokal-Empfangssignal legt im Gegensatz dazu die "feine" Lage des Modulationssymbols in dem Konstellationsdiagramm fest. So legt beispielsweise das Satelliten-Empfangssignal fest, in welchem Quadraten des Konstellationsdiagramms sich ein Modulationssymbol befindet, während das Lokal-Empfangssignal dazu dient, eines von mehreren in dem durch das Satelliten-Empfangssignal festgelegten Quadranten vorhandenen Modulationssymbolen auszuwählen.

Weiterhin wird es bevorzugt, dass eine Trägerfrequenz des von der terrestrischen Sendestation ausgesendeten Kombinationssignals gleich einer Trägerfrequenz des Satellitensignals gewählt wird. Eine solche Ausführungsform bringt besonders große Vorteile gegenüber herkömmlichen bekannten Lösungen. Die erfindungsgemäße terrestrische Sendestation strahlt nämlich ein Kombinationssignal ab, das sich von dem Satellitensignal im Wesentlichen nur dadurch unterscheidet, dass das Kombinationssignal eine Erweiterungsschicht der hierarchischen Modulation nutzt, während das Satellitensignal lediglich die Basisschicht der hierarchischen Modulation nutzt. Es ist hierbei von besonderem Vorteil, wenn das Modulationsverfahren, das bei der Aussendung des Kombinationssignals verwendet wird, gleich dem Modulationsverfahren des Satellitensignals ist. In diesem Fall unterscheiden sich das von der terrestrischen Sendestation ausgestrahlte Kombinationssignal und das Satellitensignal lediglich durch die in der Erweiterungsschicht enthaltene Information, die von dem lokalen Signal geliefert wird. Das von der terrestrischen Sendestation ausgestrahlte Kombinationssignal umfasst somit die Information des Satellitensignals zuzüglich der Information des lokalen Signals. Das Satellitensignal und das Kombinationssignal beeinträchtigen sich aber gegenseitig nicht wesentlich, obwohl sie beide auf der gleichen Trägerfrequenz ausgesendet werden.

Dies hat seine Ursache darin, dass dem Kombinationssignal von de Sendestation (bezogen auf das Satellitensignal) lediglich eine zusätzliche Information, die in der Erweiterungsschicht enthalten ist, hinzugefügt wird, während die in der Basisschicht des Kombinationssignals enthaltene Information gegenüber dem Satellitensignal unverändert ist. Somit findet zwischen dem Satellitensignal und dem ausgestrahlten Kombinationssignal stets eine positive (konstruktive) Überlagerung statt. Ferner muss ein Empfänger lediglich auf den Empfang bei einer Trägerfrequenz ausgelegt werden. Je nach den Gegebenheiten kann der Empfänger entweder nur das Satellitensignal (wenn er weit entfernt von der terrestrischen Sendestation ist), eine Überlagerung des Satellitensignals und des terrestrischen Kombinationssignals (wenn er nahe genug bei der terrestrischen Sendestation ist und das Satellitensignal nicht abgeschattet ist) oder nur das Kombinationssignal empfangen (wenn er sich in der Nähe der terrestrischen Sendestation befindet und das Satellitensignal beispielsweise durch ein Gebäude abgeschattet ist). In allen drei Fällen kann ein Empfänger die in der Basisschicht der hierarchischen Modulation enthaltene Information (die auf dem Satellitensignal basiert bzw. durch das Satellitensignal alleine geliefert wird) ohne eine störende Beeinflussung zwischen dem Satellitensignal und dem Kombinationssignal empfangen. Wenn der Empfänger sich nahe genug an der terrestrischen Sendestation befindet, so kann er zusätzlich zu der in der Basisschicht der hierarchischen Modulation enthaltenen Information auch die in der Erweiterungsschicht der hierarchischen Modulation enthaltene, auf dem lokalen Signal basierende, Information, empfangen. Der Empfänger kann auch gleichzeitig die Information der Basisschicht und der Erweiterungsschicht empfangen, ohne dazu ein zweites Hochfrequenzteil oder eine Signalaufbereitung für eine zweite Trägerfrequenz aufweisen zu müssen. Somit können Empfänger mit sehr einfachen Hochfrequenz-Eingangsteil verwendet bzw. geschaffen werden, die stets sämtliche zur Verfügung stehende Information (also stets die in der Basisschicht enthaltene Information und ggf. zusätzlich die in der Erweiterungsschicht enthaltene Information) empfangen können.

Ferner wird es bevorzugt, dass die terrestrische Sendestation eine Verzögerungseinrichtung umfasst, die ausgelegt ist, um in den Signalweg (in der Sendestation) eine Verzögerung derart einzuführen, dass das Satellitensignal und das von der terrestrischen Sendestation abgestrahlte Kombinationssignal an einem vorgegebenen Ort in Phase sind. Die Verzögerungszeit der Verzögerungseinrichtung kann beispielsweise fest vorgegeben sein oder aus Zeitsignalen, die in dem Satellitensignal enthalten sind, abgeleitet werden. Ferner kann die terrestrische Sendestation eine abgesetzte Überwachungseinrichtung umfassen, die eine Phasenverschiebung zwischen dem Satellitensignal und dem von der terrestrischen Sendeeinrichtung gelieferten Signal feststellen kann, und die derart auf die Verzögerungseinrichtung der terrestrischen Sendestation einwirken kann, dass die Phasenverschiebung zu Null wird. Damit kann selbst in schwierigem Gelände der gleichzeitige Empfang des Satellitensignals und des von der Sendestation abgestrahlten Kombinationssignals optimiert werden.

Weiterhin wird es bevorzugt, dass der erste Empfänger ausgelegt ist, um aus dem Satellitensignal ein modifiziertes Satelliten-Empfangssignal abzuleiten, in dem ein Dateninhalt eines in dem Satellitensignal vorhandenen Datenkanals durch einen anderen Dateninhalt ersetzt ist. Es wird bevorzugt, dass der andere Dateninhalt in dem lokalen Signal enthalten ist bzw. dem lokalen Signal entnommen wird. Dadurch kann in dem von der terrestrischen Sendestation abgestrahlten Kombinationssignal ein Dateninhalt des Satellitensignals durch einen Dateninhalt des lokalen Signals ersetzt werden. Dies ist vorteilhaft, falls ansonsten keine ausreichende Kapazität zur Ausstrahlung des in dem lokalen Signal enthaltenen Dateninhalts vorhanden ist. Im übrigen wird darauf hingewiesen, dass eine solche Lösung bevorzugt eingesetzt wird, wenn das Satellitensignal und das Kombinationssignal verschiedene Trägerfrequenzen aufweisen.

Weiterhin ist es möglich, dass der erste Empfänger ausgelegt ist, um aus dem Satellitensignal ein modifiziertes Satelliten-Empfangssignal abzuleiten, das einen Dateninhalt des Satellitensignals nur teilweise enthält. In anderen Worten, es ist möglich, nur einen Teil des Dateninhalts des Satellitensignals abzustrahlen. Dies kann beispielsweise aus medienrechtlichen Gründen erforderlich sein. Auch kann eine solche Maßnahme der Einsparung von Sendeleistung dienen.

Weiterhin schafft die vorliegende Erfindung ein satellitengestütztes Rundfunksystem mit einem Satelliten, der ausgelegt ist, um ein Satellitensignal auszusenden, sowie einer ersten terrestrischen Sendestation. Ein solches satellitengestütztes Rundfunksystem erlaubt sowohl eine Verteilung des Rundfunksignals über den Satelliten als auch über eine oder mehrere terrestrische Sendestationen. Ferner ermöglicht es ein erfindungsgemäßes satellitengestütztes Rundfunksystem, lokale Informationen, die zu der terrestrischen Sendestation über ein lokales Signal geliefert werden, so mit dem Satellitensignal zu kombinieren, das die terrestrische Sendestation ein Kombinationssignal abstrahlt, das sowohl die Informationen des Satellitensignals als auch die Information des lokalen Signals enthält und ferner nicht in eine destruktive bzw. störende Wechselwirkung mit dem Satellitensignal tritt. Vielmehr kann eine konstruktive Überlagerung des Satellitensignals und des terrestrisch abgestrahlten Kombinationssignals erzielt werden. Auf weitere Vorteile des erfindungsgemäßen satellitengestützten Rundfunksystems wurde bereits bei der Diskussion der terrestrischen Sendestation eingegangen, so dass diese hier nicht mehr wiederholt werden.

Es sei im Übrigen darauf hingewiesen, dass es bevorzugt wird, mehrere terrestrische Sendestationen vorzusehen, die verschiedene lokale Signale empfangen. Selbst bei einer solchen Konstellation tritt allerdings, anders als bei herkömmlichen Systemen, keine destruktive Wechselwirkung der von den mehreren terrestrischen Sendestationen ausgestrahlten Kombinationssignale auf, die die in der Basisschicht der hierarchischen Modulation übertragene Information unbrauchbar machen kann.

Es wird weiterhin bevorzugt, dass das satellitengestützte Rundfunksystem eine Basisstation bzw. Satelliten-Basisstation umfasst, die ausgelegt ist, um ein erstes Basisstation-Signal und ein zweites Basisstation-Signal an den Satelliten zu schicken, und dass der Satellit ausgelegt ist, um das erste Basisstation-Signal als ein erstes Satellitensignal und das zweite Basisstation-Signal als ein zweites Satellitensignal weiterzuleiten. Dabei sind die Basisstationen und der Satellit bevorzugt so ausgelegt, dass das erste Satellitensignal und das zweite Satellitensignal einen gleichen NutzdatenInhalt aufweisen, und dass das zweite Satellitensignal gegenüber dem ersten Satellitensignal um eine vorgegebene Verzögerungszeit verzögert ist. Damit wird es ermöglicht, dass auch bei Berücksichtigung einer Verzögerungszeit der ersten terrestrischen Sendestation das von der ersten terrestrischen Sendestation ausgestrahlte Kombinationssignal und das zweite Satellitensignal sich konstruktiv überlagern können. In anderen Worten, durch die beschriebene Auslegung wird erreicht, dass ein bei einem Empfänger eingehendes Satellitensignal und ein bei dem Empfänger eingehendes (von der terrestrischen Sendestation ausgesendetes) Kombinationssignal jederzeit Zeit einen gleichen Dateninhalt aufweisen, und dass sich somit die Modulationsinhalte des Satellitensignals und des Kombinationssignals bei dem Empfänger konstruktiv überlagern.

Ferner wird es bevorzugt, dass das zweite Satellitensignal eine größere Signalstärke aufweist (bzw. mit einer größeren Sendeleistung bzw. effektiven Sendeleistung von dem Satellit abgestrahlt wird) als das erste Satellitensignal. Dadurch wird es dem Empfänger ermöglicht, auch mit einer vergleichsweise kleinen Antenne, wie sie beispielsweise in einem mobilen Gerät eingesetzt werden kann, das zweite Satellitensignal zu empfangen. Für das erste Satellitensignal ist eine geringere Leistung zweckmäßig, da an dem Ort einer terrestrischen Sendestation in manchen Fällen ein vergleichsweise hoher Antennenaufwand betrieben werden kann, so dass auch ein vergleichsweise schwaches erstes Satellitensignal von einer terrestrischen Sendestation empfangen werden kann.

Schließlich wird es bevorzugt, dass die erste terrestrische Sendestation, die zweite terrestrische Sendestation und der Satellit so ausgelegt sind, dass das zweite Satellitensignal, das von der ersten terrestrischen Sendestation abgestrahlte Kombinationssignal und das von der zweiten terrestrischen Sendestation abgestrahlte Kombinationssignale eine gleiche Trägerfrequenz und eine gleiche Modulationsart aufweisen. Dadurch wird es schließlich ermöglicht, dass das zweite Satellitensignal und die von den Sendestationen ausgestrahlten Kombinationssignale eine positive Interferenz aufweisen können bzw. sich konstruktiv überlagern können. Folglich kann ein guter Empfang gewährleistet werden.

Ferner wird darauf hingewiesen, dass es vorteilhaft ist, wenn der Satellit und die Basisstation so ausgelegt sind, dass das zweite Satellitensignal eine Information nur in der Basisschicht der hierarchischen Modulation enthält, während die Kombinationssignale (der terrestrischen Sendestationen) Informationen sowohl in der Basisschicht als auch in der Erweiterungsschicht des Kombinationssignals aufweisen. Die Verwendung eines zweiten Satellitensignals ohne Informationsinhalt in der Erweiterungsschicht verhindert somit, dass das zweite Satellitensignal die in der Erweiterungsschicht der Kombinationssignale der terrestrischen Sendestationen enthaltenen Informationen stört.

Im übrigen sei darauf hingewiesen, dass die Verwendung des zweiten Satellitensignals optional ist. Ein einziges von dem Satellit abgestrahltes Signal ist in manchen Anwendungen ausreichend, wobei dann freilich auch nur ein einziges Basisstation-Signal erforderlich ist. Das eine in diesem Fall vorhandene Satellitensignal kann dann sowohl von den Endgeräten als auch von der terrestrischen Sendestation bzw. den terrestrischen Sendestationen verwendet werden.

Die vorliegende Erfindung schafft ferner eine Empfangseinrichtung zum Empfangen eines von einer terrestrischen Sendestation ausgestrahlten Signals. Die Empfangseinrichtung umfasst einen Empfänger zum Empfangen des ausgestrahlten Kombinationssignals, um ein Empfangssignal zu erhalten. Der Empfänger umfasst ferner einen Decodierer zum Decodieren des Empfangssignals unter Verwendung einer hierarchischen Modulation, wodurch der Decodierer für ein Modulationssymbol eine Binärgruppe erhalten kann. Die Empfangseinrichtung umfasst ferner einen Datensplitter zum Splitten einer ersten Gruppe von Bits aus der Binärgruppe, so dass die erste Gruppe von Bits die Basisschicht des Satellitensignals beschreibt. Der Datensplitter ist ferner ausgelegt, um eine zweite Gruppe von Bits aus der Binärgruppe zu erhalten, die die Erweiterungsschicht der hierarchischen Modulation des Satellitensignals beschreiben bzw. die der Erweiterungsschicht der hierarchisen Modulation zugeordnet sind.

Mit anderen Worten, die erfindungsgemäße Empfangseinrichtung ist ausgelegt, um das Kombinationssignal in einen ersten Teil (die erste Gruppe von Bits) und einen zweiten Teil (die zweite Gruppe von Bits) aufzuspalten, wobei der erste Teil die in dem Satellitensignal enthaltenen Informationen umfasst, und wobei der zweite Teil die in dem lokalen Signal enthaltene Information umfasst. In anderen Worten, die erfindungsgemäße Empfangseinrichtung ist in der Lage, sowohl die Informationen des Satellitensignals als auch die Informationen des lokalen Signals getrennt zu empfangen.

Ferner wird darauf hingewiesen, dass die erfindungsgemäße Empfangseinrichtung in der Lage ist, auch in Situationen, in denen sowohl das Satellitensignal, als auch das Kombinationssignal von der terrestrischen Sendestation empfangen werden, einen störungsfreien Empfang zu gewährleisten.

Schließlich wird es bevorzugt, bei einer erfindungsgemäßen Empfangseinrichtung zwei Einrichtungen zur Kanaldecodierung vorzusehen, die unterschiedliche Coderaten aufweisen, und um die erste Kanal-Decodiereinrichtung mit der größeren Coderate auf die erste Gruppe von Bits anzuwenden, und die zweite Decodiereinrichtung mit der geringeren Coderate auf die zweite Gruppe von Bits anzuwenden. Dadurch kann erreicht werden, dass ein aus der ersten Gruppe von Bits mit Hilfe der ersten Kanal-Decodiereinrichtung (auch als Kanal-Decodierer bezeichnet) gewonnener Bitstrom eine erste Bitfehlerrate aufweist, die ähnlich einer zweiten Bitfehlerrate eines aus der zweiten Gruppe von Bits mit Hilfe der zweiten KanalDecodiereinrichtung gewonnen Bitstroms ist.

Bevorzugte Ausführungsbeispiele der vorliegenden Erfindung werden nachfolgend bezugnehmend auf die beiliegenden Zeichnungen näher erläutert. Es zeigen:
- Fig. 1: eine Prinzipdarstellung einer hierarchischen Modulation;
- Fig. 2: ein Blockschaltbild des DVB-T-Encoders;
- Fig. 3a: ein Konstellationsdiagramm einer nicht-uniformen 16-QAM-Modulation;
- Fig. 3b: ein Konstellationsdiagramm einer nicht-uniformen 64-QAM-Modulation;
- Fig. 4: eine Prinzipdarstellung eines Hybridsystems;
- Fig. 5: eine graphische Darstellung eines typischen Frequenzplans eines Hybridsystems mit unterschiedlichen Trägerfrequenzen für ein Satellitensignal und ein terrestrisches Signal;
- Fig. 6: ein Blockschaltbild einer Senderarchitektur eines Hybridsystems mit Transcodierung;
- Fig. 7a: eine schematische Darstellung eines ersten Satellitensystems mit Füllsendern (GAP-filler);
- Fig. 7b: eine graphische Darstellung eines zweiten, erweiterten Satellitensystems mit Füllsenders (GAP-filler);
- Fig. 8: ein grobes Blockschaltbild einer erfindungsgemäßen Sendestation gemäß einem ersten Ausführungsbeispiel der vorliegenden Erfindung;
- Fig. 9: einen Auszug aus einem detaillierten Blockschaltbild einer erfindungsgemäßen Sendestation gemäß einem zweiten Ausführungsbeispiel der vorliegenden Erfindung;
- Fig. 10: einen Auszug aus einem detaillierten Blockschaltbild einer erfindungsgemäßen Sendestation gemäß einem dritten Ausführungsbeispiel der vorliegenden Erfindung;
- Fig. 11: eine schematische Darstellung eines erfindungsgemäßen satellitengestützten Rundfunksystems gemäß einem vierten Ausführungsbeispiel der vorliegenden Erfindung;
- Fig. 12: eine schematische Darstellung eines erfindungsgemäßen satellitengestützten Rundfunksystems gemäß einem fünften Ausführungsbeispiel der vorliegenden Erfindung;
- Fig. 13: ein Blockschaltbild einer erfindungsgemäßen Sendestation gemäß einem sechsten Ausführungsbeispiel der vorliegenden Erfindung;
- Fig. 14: ein Blockschaltbild einer erfindungsgemäßen Empfangseinrichtung gemäß einem siebten Ausführungsbeispiel der vorliegenden Erfindung; und
- Fig. 15: eine graphische Darstellung einer beispielhaften Zuordnung von Trägerfrequenzen von Satellitensignalen und terrestrischen Signalen.

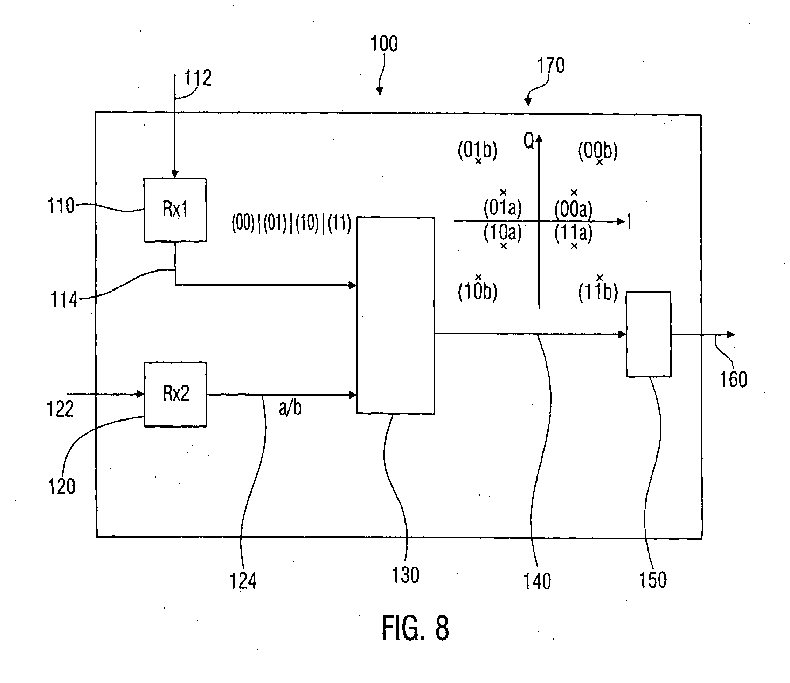

Fig. 8 zeigt ein grobes Blockschaltbild einer erfindungsgemäßen terrestrischen Sendestation gemäß einem ersten Ausführungsbeispiel der vorliegenden Erfindung. Die in Fig. 8 gezeigte Sendestation ist in der Gesamtheit mit 100 bezeichnet.

Die Sendestation umfasst einen ersten Empfänger 110, der ein Satellitensignal 112 empfängt, und der basierend auf dem Satellitensignal 112 ein Satelliten-Empfangssignal 114 erzeugt. Die Sendestation 100 umfasst ferner einen zweiten Empfänger 120, der ein lokales Signal 122 empfängt und basierend darauf ein Lokal-Empfangssignal 124 erzeugt. Die Sendestation 100 umfasst ferner einen Signalkombinierer 130, der das Satelliten-Empfangssignal 114 und das Lokal-Empfangssignal 124 empfängt und basierend darauf ein Kombinationssignal 140 bildet. Die Sendestation 100 umfasst ferner einen Sender 150, der das Kombinationssignal 140 empfängt und ein Sendesignal 160 erzeugt. Das Sendesignal 160 kann beispielsweise einer Sendeantenne zugeführt werden, die hier nicht gezeigt ist.

Basierend auf der strukturellen Beschreibung wird im Folgenden die Funktionsweise der Sendestation 100 beschrieben. Der Signalkombinierer 130 ist ausgelegt, um das Satelliten-Empfangssignal 114 und das Lokal-Empfangssignal 124 zu kombinieren. Der Signalkombinierer 130 ist ausgelegt, um das Kombinationssignal 140 so zu bilden, dass das Kombinationssignal gemäß einer hierarchischen Modulation gebildet ist. Dabei ist das Satelliten-Empfangssignal in dem Kombinationssignal in einer Basisschicht der hierarchischen Modulation enthalten, während das Lokal-Empfangssignal in dem Kombinationssignal 140 in einer Erweiterungsschicht der hierarchischen Modulation enthalten ist.

Das Blockschaltbild der Fig. 8 zeigt zur Verdeutlichung ein beispielhaftes Konstellationsdiagramm 170, das an einer Abszisse einen Inphase-Anteil (I) eines Modulationssymbols (bzw. eines komplexen Modulationssignals) und an einer Ordinate einen Quadratur-Anteil (Q) des (komplexwertigen) Modulationssymbols zeigt. Im übrigen sei angemerkt, dass der Inphase-Anteil auch als Realteil des komplexen Modulationssymbols und der Quadratur-Anteil auch als Imaginärteil des komplexen Modulationssymbols betrachtet werden kann. Das Kombinationssignal 140 stellt somit ein komplexwertiges Modulationssignal dar, dass dem Sender 150 zugeführt wird. Es wird hierbei angenommen, dass der Sender 150 die Modulation übernimmt, also basierend auf dem komplexwertigen Modulationssignal 140 ein moduliertes Sendesignal 160 erzeugt.

Zum Verständnis des Konstellationsdiagramms 170 sei weiterhin ausgeführt, dass hier beispielhaft davon ausgegangen wird, dass das Satelliten-Empfangssignal 114 pro Datensymbol zwei Bits umfasst, so dass das Satelliten-Empfangssignal (in einem Schritt bzw. in einer Taktperiode) nur die vier Werte (00), (01), (10) und (11) annehmen kann. Ferner wird hier davon ausgegangen, dass das lokale Empfangssignal 124 pro Datensymbol zwei Werte annehmen kann, die hier mit a und b bezeichnet sind (die Werte a und b wurden allerdings lediglich zur Verbesserung der Anschaulichkeit des Konstellationsdiagramms 170 verwendet, wo er beispielsweise a=0 und b=1 oder umgekehrt gelten kann).

Der Signalkombinierer 130 ist bevorzugt ausgelegt, um basierend auf dem Satelliten-Empfangssignal 114 und dem Lokal-Empfangssignal 124 das Kombinationssignal 140 zu bilden, das gemäß einer hierarchischen Modulation gebildet ist. Das Datensymbol des Satellitensignals ((00), (01), (10) oder (11)) bestimmt hierbei in der in dem Konstellationsdiagramm 170 beispielhaft gezeigten Weise die "grobe" Lage eines Modulationssymbols (x) in dem Konstellationsdiagramm. In anderen Worten, das Datensymbol des Satellitensignals 114 ist der Basisschicht der hierarchischen Modulation zugeordnet. Das Datensymbol (a oder b) des Lokal-Empfangssignals 124 hingegen bestimmt die "feine" Lage des Modulationssymbols (x) in dem Konstellationsdiagramm (170). In anderen Worten, das Datensymbol des Lokal-Empfangssignals 124 ist der Erweiterungsschicht der hierarchischen Modulation zugeordnet.

In anderen Worten, bereits aus der groben Lage des Kombinationssignals 140 in dem Konstellationsdiagramm ist das Datensymbol des Satelliten-Empfangssignals 114 bekannt. So genügt es beispielsweise bei dem gezeigten Beispiel, in einem (hier nicht gezeigten) Empfänger den Quadranten eines Konstellationsdiagramms zu bestimmen, in dem das Kombinationssignal 140 liegt, um auf das Datensymbol des Satelliten-Empfangssignals 114 zurückschließen zu können. Ist die Lage des Modulationssymbols genauer bekannt, so kann zusätzlich auch das zugehörige Datensymbol (a oder b) des Lokal-Empfangssignals 124 ermittelt werden.

Die Verwendung einer gezeigten erfindungsgemäßen Sendestation bringt wesentliche Vorteile mit sich. Ein Satelliten-Empfangssignal 114 und ein Lokal-Empfangssignal 124 können durch den Signalkombinierer 130 so kombiniert werden, dass ein Kombinationssignal 140 mit einer hierarchischen Modulation entsteht. Die Basisschicht der hierarchischen Modulation des Kombinationssignals 140 wird hierbei durch das Satelliten-Empfangssignal 114 bzw. Satellitensignal 112 festgelegt.

Die besonderen Vorteile werden der erfindungsgemäßen Sendestation ersichtlich, wenn davon ausgegangen wird, dass zwei gleichartige Sendestationen 100 derart benachbart sind, dass in einem räumlichen Überlappungsgebiet beide Sendestationen 100 empfangen werden können. Es wird weiterhin davon ausgegangen, dass beide Sendestationen das gleiche Satellitensignal 112, aber unterschiedliche lokale Signale 122 empfangen. In diesem Fall ist die Basisschicht der hierarchischen Modulation der Kombinationssignale 140 für beide Sendestationen 110 identisch. Die Sendesignale 160 der beiden Sendestationen 100 unterscheiden sich somit lediglich bezüglich der Erweiterungsschicht der hierarchischen Modulation. Überlagern sich allerdings zwei Signale (z.B. in dem räumlichen Überlappungsgebiet), die sich hinsichtlich der Basisschicht einer hierarchischen Modulation nicht unterscheiden, so unterliegt die Basisschicht der hierarchischen Modulation keinerlei Störung durch die Überlagerung. In anderen Worten, in dem angenommenen Überlagerungsgebiet von zwei Sendestationen 100 ist die in der Basisschicht der hierarchischen Modulation enthaltene Information weiterhin ohne Störungen detektierbar. Lediglich die in den Erweiterungsschichten der hierarchischen Modulation (der beiden Sendestationen) enthaltene Information ist durch die Überlagerung gestört. Somit kann ein Empfänger, der sich in dem Überlagerungsbereich bzw. Überlappungsgebiet befindet, zumindest die in der Basisschicht enthaltene Information ohne Signalstörung empfangen.

Ferner sei darauf hingewiesen, dass die erfindungsgemäße Sendestation in einer sehr effizienten Weise die Inhalte eines Satellitensignals 112 mit den Inhalten eines lokalen Signals 122 kombinieren und ein entsprechendes Kombinationssignal 140 aussenden kann. Hierzu wird ferner darauf hingewiesen, dass die erfindungsgemäße Sendestation das Satelliten-Empfangssignal 114 und das Lokal-Empfangssignal 124 in einer besonders frequenzeffizienten Weise miteinander kombiniert.

Im übrigen sei darauf hingewiesen, dass die Verwendung einer hierarchischen Modulation es ermöglicht, einem Signal, das gemäß der Basisschicht der hierarchischen Modulation moduliert ist, eine zusätzliche Information zu überlagern, die durch die Erweiterungsschicht der hierarchischen Modulation definiert ist, ohne dass eine solche Überlagerung explizit durch das ursprüngliche Signal vorgesehen sein muss. Dies ist im Gegensatz zu anderen Verfahren, wie beispielsweise Verfahren mit Zeitschlitzen, bei denen ein Hinzufügen von Informationen nur möglich ist, wenn ein freier Zeitschlitz in dem ursprünglichen Signal existiert. In ähnlicher Weise muss beim Einsatz von Frequenz-Multiplex-Verfahren ein freier Frequenzkanal in einem ursprünglichen Signal vorgesehen sein, um dem ursprünglichen Signal eine zusätzliche Information hinzufügen zu können. Hierin unterscheidet sich die erfindungsgemäße Sendestation wesentlich von bekannten terrestrischen Sendestationen.

Es wird ferner darauf hingewiesen, dass auch eine Überlagerung des Sendesignals 160 und des Satellitensignals 112 bei Verwendung einer erfindungsgemäßen Sendestation 110 auch dann nicht zu Störungen führt, wenn das Satellitensignal 112 und das Sendesignal 160 gleiche Trägerfrequenzen aufweisen, wobei angenommen wird, dass das Satellitensignal gemäß der Basisschicht der hierarchischen Modulation moduliert ist. Die Sendestation 110 fügt in diesem Falle dem Satellitensignal 112 lediglich eine Erweiterungsschicht der hierarchischen Modulation hinzu, die wiederum unempfindlich gegenüber Überlagerungen mit dem eigentlichen Satellitensignal 112 ist.

Hierbei wird freilich davon ausgegangen, dass das Satellitensignal 112 und das Sendesignal 160 zeitgleich bei einem Empfänger eintreffen, was beispielsweise erreicht werden kann, wenn die Verzögerung in der Sendestation 100 nur gering ist. Ferner wird davon ausgegangen, dass das Satellitensignal 112 nach einem Basisschicht-Konstellationsdiagramm moduliert ist, das kompatibel zu dem für die Erzeugung des Kombinationssignals 140 verwendeten Erweiterungsschicht-Konstellationsdiagramm ist.

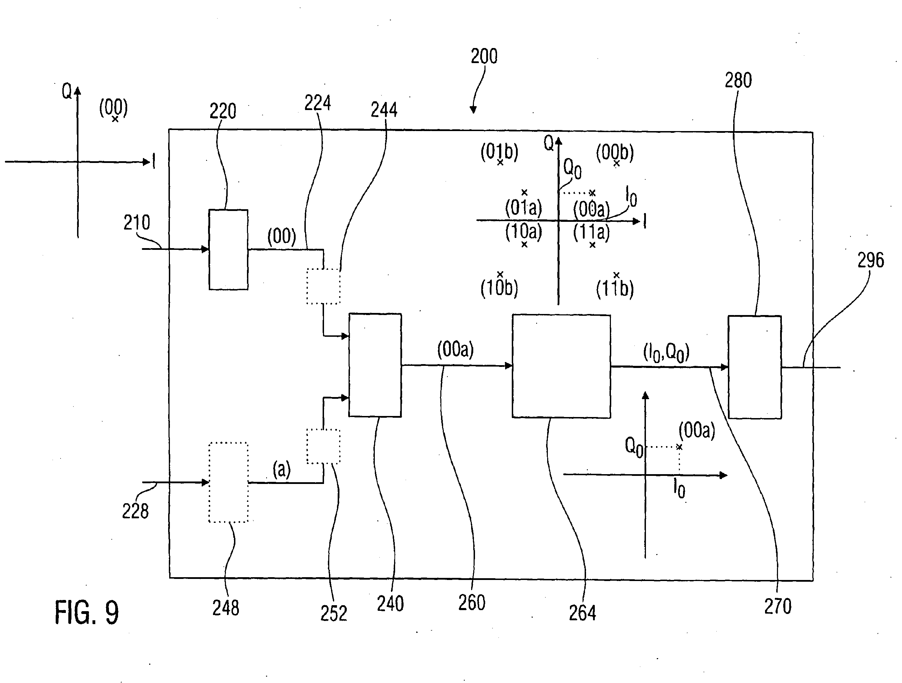

Fig. 9 zeigt einen Auszug aus einem detaillierten Blockschaltbild einer erfindungsgemäßen Sendestation gemäß einem zweiten Ausführungsbeispiel der vorliegenden Erfindung. Der in Fig. 9 gezeigte Auszug aus einem Blockschaltbild ist in seiner Gesamtheit mit 200 bezeichnet. Dem gezeigten Ausschnitt aus einem Blockschaltbild einer Sendestation wird ein moduliertes Satellitensignal 210 zugeführt, das ggf. bereits in einer Zwischenfrequenz-Ebene oder einer Basisband-Ebene vorliegt. Das modulierte Satellitensignal 210 wird einem Demodulator 220 zugeführt. Der Demodulator 220 liefert einen Bitstrom 224 von Datensymbolen, die beispielsweise jeweils 2 Bits ((00), (01), (10), (11)) umfassen können. Ferner empfängt der gezeigte Ausschnitt 200 der Sendestation einen Bitstrom 228 von Datensymbolen, der von dem lokalen Signal 122 abgeleitet ist. Der zu dem Satellitensignal 112 gehörige Bitstrom 224 wird entweder direkt einem Bitstrom-Kombinierer 240 zugeführt oder durchläuft einen optionalen ersten Kanalcodierer 244. Der auf dem lokalen Signal basierende Bitstrom 228 von Datensymbolen wird ebenso dem Bitstrom-Kombinierer 240 zugeführt und durchläuft dabei optional einen Encoder bzw. Quellencodierer 248 und/oder einem zweiten Kanalcodierer 252. Der Bitstrom-Kombinierer 240 kombiniert die Datensymbole des ersten Bitstroms 224 von Datensymbolen (beispielsweise das Datensymbol (00)) mit den Datensymbolen des zweiten Bitstroms 228 von Datensymbolen (beispielsweise das Datensymbol a) zu einem kombinierten Bitstrom 260 von Datensymbolen (beispielsweise zu dem Datensymbol (00a)). Eine optionale Quellencodierung (in dem Quellencodierer 248) und/oder eine optionale Kanalcodierung (in dem Kanalcodierer 252) ist dabei freilich nicht ausgeschlossen. Der Bitstrom 260 von kombinierten Datensymbolen wird daraufhin einem Mapper 264 zugeführt, der die kombinierten Datensymbole (beispielsweise das Datensymbol (00a)) auf Modulationssymbole abbildet, die beispielsweise durch eine Inphase-Komponente (I) und eine Quadratur-Komponente (Q) beschreibbar sind. In anderen Worten, der Mapper 264 bildet die kombinierten Datensymbole des Bitstroms 260 von kombinierten Datensymbolen auf eine Folge von Modulationssymbolen (z.B. auf das Modulationssymbol (I₀, Q₀)) ab. Die Modulationssymbole werden hierbei als komplexwertige Größen mit einem Inphase-Anteil (I) und einem Quadratur-Anteil (Q) betrachtet und bilden somit ein Kombinationssignal 270. Das komplexe Kombinationssignal 270 wird dann einem Modulator 280 zugeführt, der beispielsweise Teil des Senders ist, und der ein moduliertes Kombinationssignal 290 bildet, das den Modulationssymbolen des komplexen Kombinationssignals 270 zugeordnet ist. Das modulierte Kombinationssignal 290 ist somit ein reellwertiges Zeitsignal und kann von der Sendestation abgestrahlt werden, wozu ggf. eine weitere Frequenzumsetzung (mittels eines Mischers) auf eine Trägerfrequenz sowie eine Signalverstärkung (z.B. mittels eines Leistungsverstärkers) erforderlich sind.

Insgesamt lässt sich also festhalten, dass bei dem gezeigten Ausführungsbeispiel sowohl das Satellitensignal als auch das lokale Signal soweit demoduliert werden, dass Bitströme 224, 228 von Datensymbolen entstehen. Die Bitströme werden dann ggf. einer Quellencodierung und/oder Kanalcodierung unterzogen und schließlich in dem Bitstrom-Kombinierer 240 zu kombinierten Datensymbolen kombiniert, auf deren Basis dann durch eine Abbildung (Mapping) Modulationssymbole erzeugt werden. Somit kann die Erzeugung einer hierarchischen Modulation vollständig auf der Ebene der digitalen Signalverarbeitung erfolgen, wobei der Mapper 264 verwendet wird, um die kombinierten Datensymbole auf Modulationssymbole der Erweiterungsschicht der hierarchischen Modulation abzubilden.

Die Verwendung eines Quellencodierers 248 für eine Quellencodierung des Bitstroms 248 von Datensymbolen, der zu dem lokalen Signal gehört, ist vorteilhaft, da in der Erweiterungsschicht der hierarchischen Modulation typischerweise nur eine vergleichsweise geringe Bitrate von Nutzbits (bezogen auf die Basisschicht) transportiert werden kann. Die Erweiterungsschicht der hierarchischen Modulation ist nämlich anfälliger gegenüber kanalbedingten Störungen, da die Modulationssymbole der Erweiterungsschicht in einem Konstellationsdiagramm typischerweise einen geringeren Abstand haben als die Modulationssymbole der Basisschicht. Daher empfiehlt es sich, auf den Bitstrom 228 von Datensymbolen, die dem lokalen Signal zugeordnet sind, und die in der Erweiterungsschicht der hierarchischen Modulation übertragen werden, in einem Kanalcodierer 252 eine Kanalcodierung mit einer niedrigen Coderate (niedriger als die Coderate der in der Basisschicht übertragenen Information) anzuwenden.

Optional kann freilich auch zu dem Bitstrom 224 von Datensymbolen, die zu dem Satellitensignal gehören, in dem ersten Kanalcodierer 244 eine Kanalcodierung hinzugefügt werden, wobei allerdings typischerweise die Coderate des ersten Kanalcodierers 244 deutlich größer gewählt ist als die Coderate des zweiten Kanalcodierers 252.

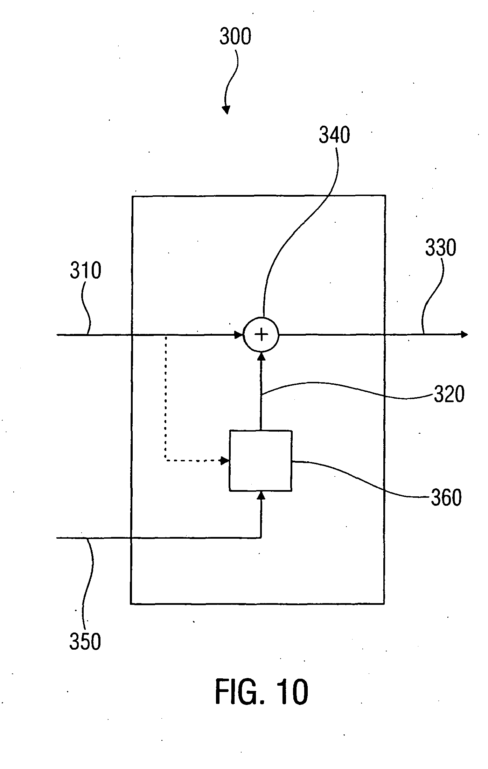

Fig. 10 zeigt einen Auszug aus einem detaillierten Blockschaltbild einer erfindungsgemäßen Sendestation gemäß einem dritten Ausführungsbeispiel der vorliegenden Erfindung. Der in Fig. 10 gezeigte Auszug aus dem Blockschaltbild ist in seiner Gesamtheit mit 300 bezeichnet und beschreibt eine Schaltungsanordnung, mit deren Hilfe einem Satelliten-Empfangssignal 310 ein Erweiterungssignal 320 überlagert werden kann, so dass ein Kombinationssignal 330 entsteht, das gemäß einer hierarchischen Modulation gebildet ist. Hierbei wird davon ausgegangen, dass das Satelliten-Empfangssignal 310 ein analoges Signal ist, das gemäß einer Basisschicht hierarchischen Modulation moduliert ist. Ein Übergang von der Basisschicht der hierarchischen Modulation zu der Erweiterungsschicht der hierarchischen Modulation kann erzielt werden, indem dem Satelliten-Empfangssignal 310 in einem Addierer 340 das Erweiterungssignal 320 hinzugefügt wird, wodurch das Kombinationssignal 330 entsteht. Das Erweiterungssignal 320 wird abhängig von Datensymbolen des Lokal-Empfangssignals 350 in einer Erweiterungssignal-Erzeugungseinrichtung 360 erzeugt.

Die Erweiterungssignal-Erzeugungseinrichtung 360 kann beispielsweise in Abhängigkeit von einem Datensymbol des Lokal-Empfangssignals 350 ein Signal erzeugen, dessen Amplitude und/oder Phase von den Datensymbolen des Lokal/Empfangssignals 350 abhängt.

Im übrigen ist anzumerken, dass die Erweiterungssignal-Erzeugungseinrichtung 360 neben dem Lokal-Empfangssignal 350 auch das Satelliten-Empfangssignal 310 auswerten kann, um beispielsweise die entsprechenden Datensymbole, eine Amplitude oder eine Phasenlage des Satelliten-Empfangssignals 310 zu ermitteln und in die Erzeugung des Erweiterungssignals 320 einfließen zu lassen.

Es zeigt sich somit also, dass es möglich ist, das Kombinationssignal 330, das gemäß der Erweiterungsschicht der hierarchischen Modulation gebildet ist, nicht nur auf digitalem Wege (wie anhand von Fig. 9 beschrieben), sondern auch mit einer analogen Schaltungsanordnung zu erzeugen. So ist es eben nicht zwingend notwendig, aus dem Satelliten-Empfangssignal 310 durch vollständige Demodulation einen Bitstrom zu bilden. Vielmehr kann auch dem undemodulierten Satelliten-Empfangssignal 310, das gemäß der Basisschicht der hierarchischen Modulation moduliert ist, ein Erweiterungssignal 320 hinzugefügt werden, so dass das entstehende Kombinationssignal 330 gemäß der Erweiterungsschicht der hierarchischen Modulation moduliert ist.

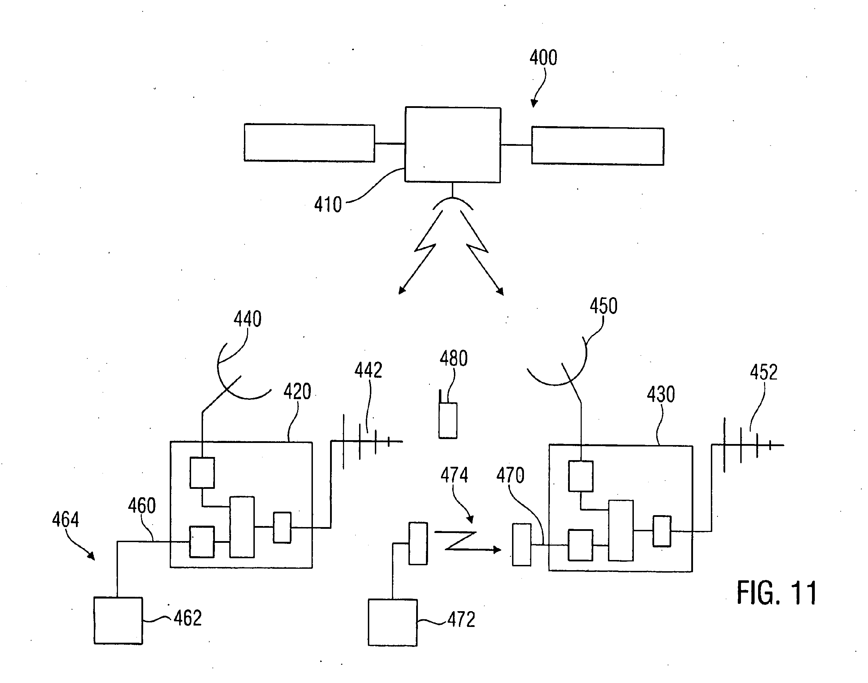

Fig. 11 zeigt eine schematische Darstellung eines erfindungsgemäßen satellitengestützten Rundfunksystems gemäß einem vierten Ausführungsbeispiel der vorliegenden Erfindung. Das in Fig. 11 gezeigte satellitengestützte Rundfunksystem ist in seiner Gesamtheit mit 400 bezeichnet.

Kern des satellitengestützten Rundfunksystems 400 ist ein Satellit 410, der mit einer ersten terrestrischen Sendestation 420 und einer zweiten terrestrischen Sendestation 430 in Verbindung steht. Die terrestrischen Sendestationen 420, 430 entsprechen der anhand von Fig. 8 beschriebenen terrestrischen Sendestationen 100 und können beispielsweise auch die anhand der Fig. 9 oder 10 beschriebenen Strukturen 200 bzw. 300 aufweisen.

Die Fig. 11 zeigt weiterhin, dass die erste terrestrische Sendestation 420 eine erste Satellitenantenne 440 umfassen kann, die ausgelegt ist, um ein von dem Satelliten 410 ausgestrahltes Satellitensignal zu empfangen und dem ersten Empfänger der ersten Sendestation 420 zuzuführen. Ferner ist eine erste terrestrische Antenne 442 mit dem Sender der ersten terrestrischen Sendestation 420 gekoppelt. In ähnlicher Weise ist die zweite terrestrische Sendestation 430 mit einer zugehörigen zweiten Satellitenantenne 450 gekoppelt, um das von dem Satelliten 410 ausgestrahlte Satellitensignal zu empfangen. Auch die zweite terrestrische Sendestation 430 ist ferner ausgangsseitig mit einer terrestrischen Sendeantenne 452 verbunden.

Ferner wird darauf hingewiesen, dass der ersten terrestrischen Sendestation 420 ein erstes lokales Signal 460 von einer ersten lokalen Signalquelle 462 über eine drahtgebundene Verbindung 464 zugeführt wird. Der Begriff "lokales Signal" drückt hierbei aus, dass das entsprechende Signal dem zweiten Empfänger der ersten terrestrischen Sendestation 420 nicht von einem Satelliten, sondern über eine andere Verbindung, also beispielsweise über eine drahtgebundene Verbindung, eine Lichtwellenleiter-Verbindung oder eine terrestrische Richtfunkstrecke geführt wird. Fig. 11 zeigt weiterhin, dass der zweiten Sendestation 430 ein zugehöriges zweites lokales Signal 470 von einer zweiten lokalen Signalquelle 472 über eine Richtfunkstrecke 474 zugeführt wird.

Je nach Anwendung kann eine Trägerfrequenz, auf der das Kombinationssignal der ersten Sendestation 420 über die erste terrestrische Antenne 442 abgestrahlt wird, gleich einer Trägerfrequenz des Satellitensignals sein oder sich von diesem unterscheiden. Selbiges gilt für die Trägerfrequenz des von der zweiten Sendestation 430 über die zweite terrestrische Antenne 452 abgestrahlten Kombinationssignals.

Im übrigen können die Trägerfrequenzen des von der ersten Sendestation abgestrahlten Kombinationssignals und des von der zweiten Sendestation 430 abgestrahlten Kombinationssignals gleich sein. Ein interessanter und technisch vorteilhafter Spezialfall tritt auf, wenn die Trägerfrequenzen des Satellitensignals sowie die Trägerfrequenzen des von der ersten Sendestation 420 abgestrahlten Kombinationssignals und des von der zweiten Sendestation 430 abgestrahlten Kombinationssignals gleich sind. Somit kann ein Empfänger 480 ggf. mindestens das Satellitensignal und das von der ersten Sendestation 420 ausgesendete Signal empfangen. Da allerdings bevorzugter Weise das von der ersten Sendestation 420 abgestrahlte Kombinationssignal bis auf ein zusätzliches Erweiterungssignal gleich dem Satellitensignal ist, kann der Empfänger 480 dennoch die in den Signalen enthaltenen Informationen ungestört empfangen. Ebenso kann der Empfänger die zumindest die in der Basisschicht der hierarchischen Modulation enthaltenen Informationen ungestört erhalten, wenn er die Kombinationssignale beider terrestrischer Basisstationen empfängt.

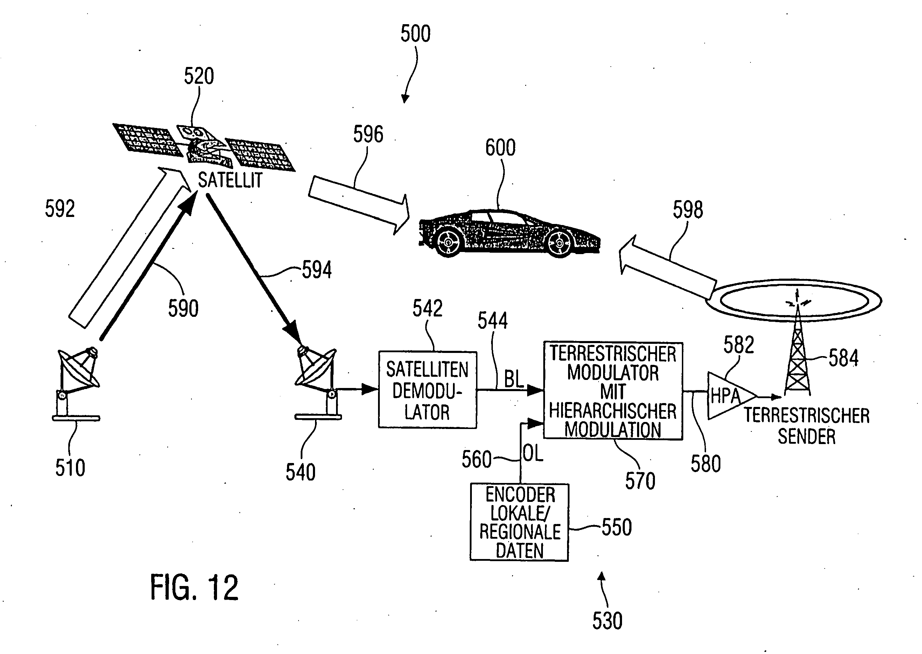

Fig. 12 zeigt eine schematische Darstellung eines erfindungsgemäßen Rundfunksystems gemäß einem fünften Ausführungsbeispiel der vorliegenden Erfindung. Das in Fig. 12 gezeigte satellitengestützte Rundfunksystem ist in seiner Gesamtheit mit 500 bezeichnet. Das System umfasst eine Satelliten-Basisstation 510, einem Satelliten 520 sowie eine terrestrische Sendestation 530. Die terrestrische Sendestation 530 umfasst eine Satellitenempfangsantenne 540, die ein empfangenes Signal einem Empfänger 542 zugeführt wird. Der Empfänger setzt das von der Satelliten-Empfangsantenne 540 gelieferte Signal typischerweise auf eine Zwischenfrequenz oder in das Basisband um und führt dann eine Demodulation durch, um ein Satelliten-Empfangssignal 544 zu erhalten. Weiterhin liefert eine lokale Datenquelle 550 lokale oder regionale Daten. Die Sendestation 530 kann hierbei einen Encoder enthalten, der die von der lokalen Datenquelle 550 gelieferten Daten einer Quellcodierung unterzieht. Es entsteht somit ein Lokal-Empfangssignal 560. Die Sendestation 530 umfasst ferner einen terrestrischen Modulator 570 mit hierarchischer Modulation. Der terrestrische Modulator 570 unterstützt die hierarchische Modulation, wobei die hierarchische Modulation eine Basisschicht ("base layer") und eine Erweiterungsschicht ("overlay-layer") zur Verfügung stellt. Entsprechend verfügt der terrestrische Modulator 570 über einen ersten Eingang BL, der die Daten für die Basisschicht (base-layer) empfängt. Der zweite Eingang OL des terrestrischen Modulators 570 empfängt die Daten für die Erweiterungsschichten (overlay-layer). Der Eingang BL des terrestrischen Modulators für die Daten der Basisschicht ist hierbei mit dem Satelliten-Demodulator 542 gekoppelt und empfängt folglich das Satelliten-Empfangssignal 544. Der Eingang OL des terrestrischen Modulators 570 für das der Erweiterungsschicht zugeordnete Signal (overlay-layer) ist mit dem Endcoder bzw. mit der lokalen Datenquelle 550 verbunden und empfängt somit folglich das Lokal-Empfangssignal 560. Der terrestrische Modulator erzeugt ein Kombinationssignal 580, das gemäß der hierarchischen Modulation moduliert ist, wobei das von dem Satellitendemodulator 542 gelieferte Satelliten-Empfangssignal auf die Basisschicht (base-layer) des terrestrischen Modulators 570 wirkt, während das Lokal-Empfangssignal 560 auf die Erweiterungsschicht des terrestrischen Modulators 570 bzw. des hierarchisch modulierten Kombinationssignals 580 wirkt. Das hierarchisch modulierte Kombinationssignal 580 wird dann einem Leistungsverstärker 582 zugeführt und über eine terrestrische Sendeantenne 584 abgestrahlt.

Es sei ferner darauf hingewiesen, dass bevorzugter Weise die Satellitenbasisstation 510 ein erstes Basisstation-Signal 590 sowie ein zweites Basisstation-Signal 592 an den Satelliten 520 aussendet. Der Satellit leitet das erste Basisstation-Signal 590 mit einer vergleichsweise geringen Sendeleistung als ein erstes Satellitensignal 594 weiter (z.B. unter Verwendung eines Transponders bzw. eines Repeaters). Das erste Satellitensignal 594 weist also eine vergleichsweise geringe Leistung auf und ist zum Empfang durch eine Satelliten-Empfangsantenne 540 einer terrestrischen Sendestation 530 gebildet. Das erste Satellitensignal 594 ist typischerweise so schwach, dass es mit kleinen Antennen, wie sie in portablen Geräten verwendet werden, nicht empfangen werden kann. Der Satellit 520 leitet ferner auch das zweite Basisstation-Signal 592 als ein zweites Satellitensignal 596 weiter, wobei das zweite Satellitensignal 596 mit einer wesentlich größeren Sendeleistung (bzw. effektiven Sendeleistung) abgestrahlt wird, als das erste Satellitensignal 594. Bevorzugter Weise ist eine Sendeleistung des zweiten Satellitensignals 596 um mindestens 10 Dezibel größer als eine Sendeleistung des ersten Satellitensendesignals 594. Das zweite Satellitensignal 596 ist zum Empfang bei einem Consumer-Endgerät gedacht und ist bevorzugt so ausgelegt, dass es auch von einem mobilen Endgerät mit einer entsprechenden kleinen Antenne, die einen Antennengewinn von weniger als 15 dBi aufweist, empfangbar ist.

Im übrigen sei darauf hingewiesen, dass das zweite Satellitensignal 596 bevorzugt um eine vorgegebene Zeitdauer gegenüber dem ersten Satellitensignal 594 verzögert ist, damit ein von der terrestrischen Sendestation 530 abgestrahltes terrestrisches Sendesignal 598 bei einem Empfänger näherungsweise gleichzeitig mit dem zweiten Satellitensignal 596 eintrifft. Die Verzögerung des zweiten Satellitensignals 596 gegenüber dem ersten Satellitensignal 594 kann entweder durch die Auslegung des Satelliten 520 oder durch die Auslegung der Satelliten-Basisstation 510 vorgegeben sein.

Die entsprechende Zeitverzögerung kompensiert dabei die in der Sendestation 530 auftretenden Verzögerungen und liegt typisch in einem Bereich zwischen 0 und 50 ms liegen. Ferner ist es möglich, dass die terrestrische Sendestation 530 eine Verzögerungseinrichtung (nicht gezeigt) umfasst, die ausgelegt ist, um sicherzustellen, dass an einem vorgegebenen Ort das zweite Satellitensignal 596 und das terrestrische Sendesignal 598 mit gleicher Phase eintreffen. Die entsprechende Verzögerungseinrichtung kann beispielsweise einstellbar ausgeführt sein, wobei die Einstellung manuell erfolgen kann. Ferner kann auch durch eine laufende Überwachung der Phasenverschiebung zwischen dem zweiten Satellitensignal 596 und dem terrestrischen Sendesignal 598 an dem vorgegebenen Ort eine Korrekturinformation erzeugt werden, die zu einer dynamischen Einstellung der beschriebenen Verzögerungseinrichtung im Rahmen einer Regelschleife dienen kann. Ferner kann die Einstellung der Verzögerungseinrichtung unter Verwendung einer Zeitinformation, die mit dem ersten Satellitensignal 594 oder mit dem zweiten Sendesignal 596 übertragen wird, erfolgen.

Zusammenfassend lässt sich also festhalten, dass das erfindungsgemäßen satellitengestützte Rundfunksystem 500 eine Architektur aufweist, die sich von den in den Fig. 6, 7a und 7b dargestellten Architekturen unterscheidet. Es wird nämlich bei dem erfindungsgemäßen satellitengestützten Rundfunksystem 500 eine lokale Information als hierarchische Information (durch Verwendung einer hierarchischen Modulation) hinzugefügt. Ferner kann im Gegensatz zu dem in Fig. 6 dargestellten System für das terrestrische Sendesignal 598 und das zweite Satellitensignal 596 die gleiche Trägerfrequenz verwendet werden. Außerdem kann eine von der lokalen Informationsquelle 550 gelieferte Information für jeden Sender (aus einer Mehrzahl von Sendestationen) unterschiedlich sein.

Ferner wird darauf hingewiesen, dass das zweite Satellitensignal 596 (wie auch das erste Satellitensignal 594) in einem erfindungsgemäßen satellitengestützten Rundfunksystem kein Overlay-Signal benutzt. In anderen Worten, das zweite Satellitensignal 596 verwendet die Erweiterungsschicht der hierarchischen Modulation nicht, sondern das zweite Satellitensignal 596 verwendet bevorzugt nur die Basisschicht der hierarchischen Information. Die Basisschicht (und nur die Basisschicht) ist für das zweite Satellitensignal 596 und das von der terrestrischen Sendestation 530 abgestrahlte terrestrische Sendesignal 598 gleich. In anderen Worten: nur die Basisschicht (base-layer) ist für Satellit und terrestrischen Sender gleich. Ferner kann (wie schon erwähnt) für das terrestrische und das Satellitensignal die gleiche Trägerfrequenz verwendet werden, wodurch sich ein erheblicher Vorteil des erfindungsgemäßen satellitengestützten Rundfunksystems ergibt. Ein Empfänger 600 muss nämlich lediglich Signale mit einer Trägerfrequenz empfangen, wodurch der Empfänger 600 sehr einfach und kostengünstig ausgelegt werden kann.

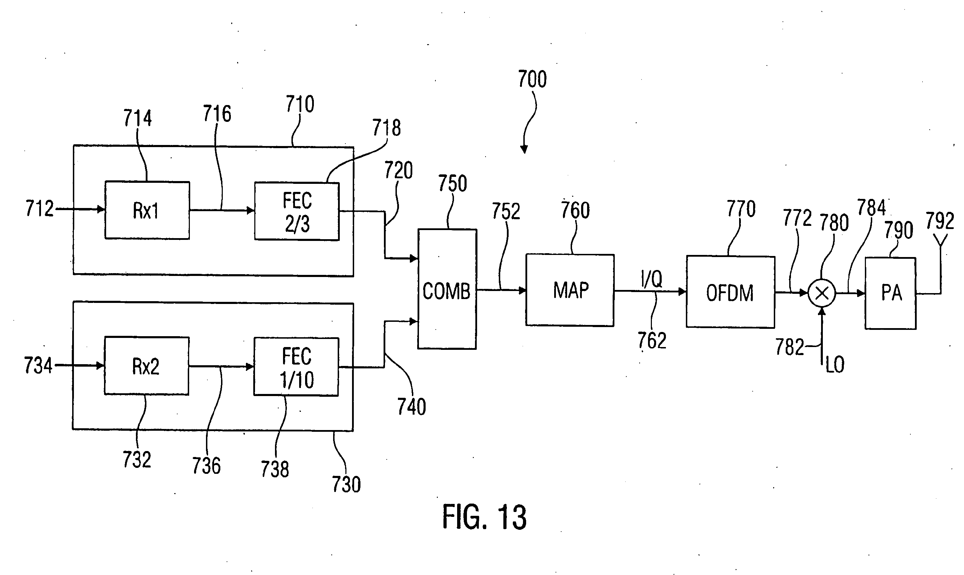

Fig. 13 zeigt ein Blockschaltbild einer erfindungsgemäßen Sendestation gemäß einem sechsten Ausführungsbeispiel der vorliegenden Erfindung. Die in Fig. 13 gezeigte Sendestation ist in ihrer Gesamtheit mit 700 bezeichnet. Im übrigen wird darauf hingewiesen, dass die in Fig. 13 gezeigte Sendestation 700 der in Fig. 8 gezeigten Sendestation 100 sehr ähnlich ist, so dass auch auf die zu der Sendestation 100 der Fig. 8 gehörige Beschreibung verwiesen wird. Ferner weist die in Fig. 13 gezeigte Sendestation 700 auch Merkmale auf, die bereits anhand der Fig. 9 beschrieben wurden, so dass auch auf die dortigen Erläuterungen Bezug genommen wird.

Die Sendestation 700 weist einen ersten Empfänger 710 auf, der ausgelegt ist, um ein Satellitensignal 712 zu empfangen. Der erste Empfänger 710 umfasst ein erstes Empfänger-Frontend 714, dem das Satellitensignal 712 zugeführt wird. Das Empfänger-Frontend 714 umfasst beispielsweise einen oder mehrere Frequenzumsetzer und/oder einen Demodulator. Das erste Empfänger-Frontend 714 liefert einen Bitstrom 716 an einen ersten Kanalcodierer 718. Der erste (optionale) Kanalcodierer 718 kann beispielsweise eine Vorwärts-Fehlerkorrektur (FEC, forward error correction) mit einer Coderate von z.B 2/3=0,667 durchführen und liefert somit ein Satelliten-Empfangssignal 720. Ein zweiter Empfänger 730 ist ähnlich dem ersten Empfänger 710 aufgebaut. Dabei unterscheidet sich aber typischerweise ein zweites Empfänger-Frontend 732 des zweiten Empfängers 73o wesentlich von dem ersten Empfänger-Frontend 714 des ersten Empfängers 710, da das zweite Empfänger-Frontend 732 bevorzugt ausgelegt ist, um ein lokales Signal 734 zu empfangen. Das lokale Signal 734 kann beispielsweise über eine drahtgebundene Übertragungsstrecke oder eine Lichtwellenleiter-Übertragungsstrecke von einer lokalen Datenquelle geliefert werden. Als lokale Datenquellen kommen beispielsweise Wiedergabegeräte für analoge oder digitale Medien in Frage. Bei der lokalen Datenquelle kann es sich aber auch um einen Personalcomputer handeln, der zur Aussendung bestimmte Nutzdaten liefert. Die lokale Datenquelle kann im übrigen auch über eine terrestrische Funkstrecke (beispielsweise eine terrestrische Richtfunkstrecke) angebunden sein. Im übrigen wird darauf hingewiesen, dass ein von dem zweiten Empfänger-Frontend 732 gelieferter Bitstrom 736 einem zweiten Kanalcodierer 738 zugeführt wird, der beispielsweise eine Vorwärts-Fehlerkorrektur mit einer Quoterate von 1/10=0,1 durchführt.

Allgemein gesprochen wird es bevorzugt, dass die Coderate des ersten Kanalcodierers 718 im Bereich von 1/3 bis 2/3 ist, während die Quoterate des zweiten Kanalcodierers 738 bevorzugter Weise kleiner als 0,15 gewählt ist. Der zweite Kanalcodierer 738 liefert im Übrigen ein Lokal-Empfangssignal 740.

Sowohl das Satelliten-Empfangssignal 720 als auch das Lokal-Empfangssignal 740 sind durch codierte Datensymbole beschreibbar, wobei eine binäre Codierung bevorzugt wird. Die in dem Satelliten-Empfangssignal 720 und dem Lokal-Empfangssignal 740 enthaltenen Datensymbole werden dann in dem Bitstrom-Kombinierer 750 zu kombinierten Datensymbolen 752 kombiniert. Die kombinierten Datensymbole 752 (die wiederum.bevorzugt in Form eines parallelen oder seriellen Bitstroms vorliegen) werden dann durch einen Mapper 760 auf Modulationssymbole abgebildet, die beispielsweise als komplexwertiges Kombinationssignal (mit Inphase-Komponente und Quadratur-Komponente) 762 bereitgestellt werden. Ein OFDM-Modulator (OFDM = "orthogonal frequency deviation multiplex" = "orthogonales Frequenzmultiplex") 770 empfängt dann das komplexwertige Kombinationssignal 762 und erzeugt ein OFDMmoduliertes Signal 772. Das OFDM-modulierte Signal 772 wird dann einem Mischer 780 in dem Sender zugeführt, wo es mit einem Oszillatorsignal 782 eines lokalen Oszillators (LO) gemischt wird. Durch den Mischer kann somit eine Frequenzumsetzung erzielt werden. Gegebenenfalls benötigte Filter sind hier zur Vereinfachung nicht gezeigt. Ein Leistungsverstärker 790 verstärkt schließlich das gemischte Signal 784 und stellt das verstärkte Signal für eine Antenne 792 zur Verfügung.

Es sollte hierbei angemerkt werden, dass die Verwendung von Kanalcodierern 718, 738 mit unterschiedlichen Coderaten vorteilhaft ist, da durch das Prinzip der hierarchischen Modulation das lokale Empfangssignal 740 anfälliger gegenüber Kanalstörungen ist, die bei einer drahtlosen Übertragung auftreten können. Ferner wird darauf hingewiesen, dass eine OFDM-Modulation sich besonders gut in Kombinationen mit der hierarchischen Modulation verhält und daher hier bevorzugt eingesetzt wird.

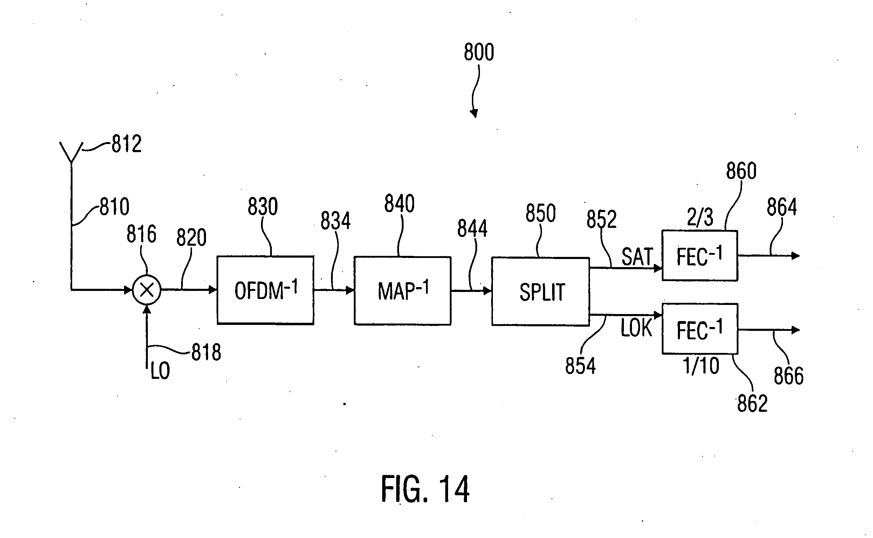

Fig. 14 zeigt ein Blockschaltbild eines erfindungsgemäßen Empfängers gemäß einem siebten Ausführungsbeispiels der vorliegenden Erfindung. Der in Fig. 14 gezeigte Empfänger ist in seiner Gesamtheit mit 800 bezeichnet. Der Empfänger empfängt ein Empfangssignal 810, das typischerweise von einer Antenne 812 geliefert wird und ein Satellitensignal, ein terrestrisches Sendesignal oder eine Überlagerung aus einem Satellitensignal und einem terrestrischen Sendesignal umfasst. Das Empfangssignal 810 wird an einen Mischer 816 zugeführt, wobei das Empfangssignal 810 mit einem Oszillatorsignal 818 von einem lokalen Oszillator gemischt wird. Somit erfolgt eine Frequenzumsetzung, wodurch ein Zwischenfrequenzsignal bzw. Basisbandsignal 820 entsteht. Die Frequenzumsetzung in dem Mischer 816 ist freilich als optional anzusehen, da bei besonderen Ausführungsformen auch das Empfangssignal 810 direkt einer weiteren Signalverarbeitung zugeführt werden kann.

Es werde im Folgenden beispielhaft davon ausgegangen, dass das Zwischenfrequenzsignal bzw. Basisbandsignal 820 einem OFDM-Demodulator 830 zugeführt wird. Der OFDM-Demodulator 830 ist ausgelegt, um eine OFDM-Modulation rückgängig zu machen und um an seinem Ausgang einen Strom 834 von Modulationssymbolen bereitzustellen. Die Modulationssymbole bestehen typischerweise aus einem oder mehreren komplexen Werten, welche einem Demapper 840 zugeführt werden. Der Demapper 840 ist ausgelegt, um ein Mapping in einem Sender, das heißt, eine Abbildung von Datensymbolen auf komplexwertige Modulationssymbole, rückgängig zu machen. In anderen Worten, der Demapper 840 ist bevorzugt ausgelegt, um die Lage eines Modulationssymbols aus dem Strom 834 von Modulationssymbolen in einem Konstellationsdiagramm zu bestimmen, und um dann basierend darauf dem Modulationssymbol ein Datensymbol zuzuordnen. Hierbei kann der Demapper 840 harte Entscheidungen (hard decisions) oder weiche Entscheidungen (soft decisions) treffen. Weiche Entscheidungen umfassen Wahrscheinlichkeitsaussagen über die statistische Wahrscheinlichkeit von verschiedenen Datensymbolen, wobei auch Korrelationen innerhalb des Stroms 834 von Modulationssymbolen zur Verbesserung der Zuverlässigkeit der Entscheidungen verwendet werden können. Im übrigen wird darauf hingewiesen, dass der Demapper 840 bevorzugt ausgelegt ist, um eine hierarchische Modulation verarbeiten zu können, und um jeden Modulationsymbol der Erweiterungsschicht ein Datensymbol zuordnen zu können.

An dem Ausgang des Demappers 840 liegt somit ein Strom 844 von Datensymbolen an, wobei jedes Datensymbol ein oder mehrere Bits umfasst, das/die der Basisschicht der hierarchischen Modulation zugeordnet ist/sind sowie ein oder mehrere Bits umfasst, das/die der Erweiterungsschicht der hierarchischen Modulation zugeordnet ist/sind. Es sei hier vorsichtshalber darauf hingewiesen, dass die Bits der Erweiterungsschicht der hierarchischen Modulation freilich nur auftreten bzw. einen wohldefinierten Wert aufweisen, wenn die Erweiterungsschicht der hierarchischen Modulation in dem Empfangssignal 810 auch verwendet wird, wenn also beispielsweise in dem Empfangssignal 810 zumindest ein Anteil eines terrestrischen Sendesignals enthalten ist.

Der Empfänger 800 umfasst ferner einen Bitstrom-Teiler (Splitter) 850, der den Strom 844 von Datensymbolen empfängt. Der Bitstrom-Teiler bzw. Datenstrom-Teiler 850 ist ausgelegt, um an einem ersten Ausgang einen ersten Datenstrom 852 bereitzustellen, der diejenigen Bits aus den Datensymbolen des Stroms 844 von Datensymbolen umfasst, die der Basisschicht der hierarchischen Modulation zugeordnet sind. In anderen Worten, der erste Datenstrom 852 umfasst bei einem erfindungsgemäßen satellitengestützten Rundfunksystem (beispielsweise gemäß Fig. 12) diejenigen Informationen, die in dem ersten Satellitensignal 594 bzw. in dem zweiten Satellitensignal 596 enthalten sind (wobei ja davon ausgegangen wird, dass in den beiden Satellitensignalen 594, 596 die gleiche Information zeitlich verzögert enthalten ist). Weiterhin ist der Datenstrom-Teiler 850 ausgelegt, um in einem zweiten Datenstrom 854 diejenigen Bits aus dem Strom 844 von Datensymbolen bereitzustellen, die der Erweiterungsschicht der hierarchischen Modulation zugeordnet sind. In anderen Worten, der zweite Datenstrom 854 umfasst diejenigen Informationen, die in einem satellitengestützten Rundfunksystem 500 gemäß der Fig. 12 von der lokalen Datenquelle 550 geliefert werden.

Wie schon früher erwähnt, wird es bevorzugt, für die in der Basisschicht der hierarchischen Modulation enthaltene Information eine Kanalcodierung mit einer hohen Coderate zu verwenden, während es für die in der Erweiterungsschicht der hierarchischen Modulation enthaltene Information bevorzugt wird, eine Kanalkodierung mit einer (relativ zu der erstgenannten Coderate) niedrigen Coderate zu verwenden. Daher wird in dem erfindungsgemäßen Empfänger 800 der erste Datenstrom 852 einem (optionalen) ersten Kanal-Decodierer 860 zugeordnet. Dieser verwendet eine in dem ersten Datenstrom 852 (optional) erhaltene Redundanz und führt somit eine Fehlerkorrektur aus. Bei dem Kanal-Decodierer 860 kann es sich beispielsweise um einen VITERBI-Decodierer handeln, es kann aber auch jeder andere Kanal-Decodierer verwendet werden (z.B. Turbo oder Low Density Parity Check (LDPC) decoder.

In ähnlicher Weise, wird auch der zweite Datenstrom 854 einem zweiten Kanal-Decodierer 862 zugeführt, der ebenso eine Kanal-Decodierung und somit eine Fehlerkorrektur-Funktion ausführt. Es ist hierbei besonders vorteilhaft, wenn der erste Kanal-Decodierer 860 eine deutlich größere Coderate aufweist als der zweite Kanal-Decodierer 862. Beispielsweise wird für den ersten Kanal-Decodierer 860 bevorzugt eine Coderate von größer als 1/3, typisch von größer 1/2 verwendet.

Für den zweiten Kanal-Decodierer 862 hingegen wird bevorzugt eine Coderate verwendet, die kleiner als 0,2 ist. Noch bessere Ergebnisse können mit einer Coderate von kleiner als 0,15 erzielt werden, und bei dem bevorzugten Ausführungsbeispiel wird eine Coderate von 1/10=0,1 verwendet.

Der erste Kanal-Decodierer 68 liefert somit einen kanal-decodierten Bitstrom 864, der die in der Basisschicht der hierarchischen Modulation enthaltenen Informationen wiedergibt. Ähnlich liefert der zweite Kanal-Decodierer 862 einen zweiten Kanal-decodierten Datenstrom 866, der die in der Erweiterungsschicht der hierarchischen Modulation enthaltene Information wiedergibt.

In anderen Worten, der erste kanaldecodierte Datenstrom 864 liefert in Verbindung mit einem erfindungsgemäßen satellitengestützten Rundfunksystem die von dem Satelliten global verbreitete Information, während der zweite kanaldecodierte Datenstrom 866 separat davon die lokale Information von der lokalen Datenquelle bereitstellt.

Somit ermöglicht es der erfindungsgemäße Empfänger 800, die global ausgestrahlte Satelliteninformationen getrennt von der lokalen Information bereitzustellen, wobei die unterschiedlich starke Anfälligkeit der beiden Informationen bezüglich kanalbedingter Störungen durch die Verwendung von verschieden dimensionierten Kanal-Decodierern 860, 862 (mit verschiedenen Coderaten) kompensiert sind.

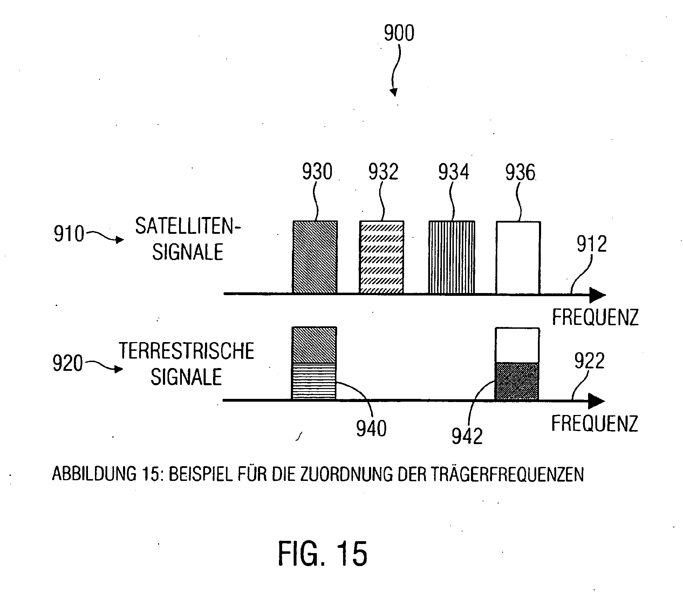

Fig. 15 zeigt eine graphische Darstellung einer beispielhaften Zuordnung von Trägerfrequenzen für Satellitensignale und terrestrische Signale. Die graphische Darstellung der Fig. 15 ist in ihrer Gesamtheit mit 900 bezeichnet. Eine erste Frequenzdarstellung 910 beschreibt die Frequenzlage von Satellitensignalen, wobei an einer Abszisse 912 die Frequenz angetragen ist. Eine zweite Frequenzdarstellung 920 beschreibt die Frequenzlage von terrestrischen Signalen, wobei wiederum an einer Abszisse 922 die Frequenz angetragen ist.

Die graphische Darstellung 900 zeigt somit ein Beispiel für eine Zuordnung von Trägerfrequenzen gemäß einer möglichen Konfiguration eines erfindungsgemäßen satellitengestützten Rundfunksystems. Bei dem anhand von Fig. 15 beschriebenen Beispiel werden vier Ensembles (Programmpakete) über Satellit abgestrahlt. Hierbei ist es beispielsweise sinnvoll, Programme auf die Ensembles entsprechend der jeweiligen Zielgruppe zuzuordnen. Es enthält beispielsweise bei dem bevorzugten Ausführungsbeispiel ein erstes Ensemble A, das auch mit 930 bezeichnet ist, überwiegend Programme in deutscher Sprache. Die anderen Ensembles konzentrieren sich auf andere Sprachen. Beispielsweise konzentriert sich das Ensemble B, das auch mit 932 bezeichnet ist, auf Französisch, das Ensemble C, das auch mit 934 bezeichnet ist, auf Spanisch und das Ensemble D, das auch mit 936 bezeichnet ist, auf Englisch.

Es wird hier ferner darauf hingewiesen, dass gemäß dem vorliegenden Ausführungsbeispiel die vier Ensembles, Ensemble A, Ensemble B, Ensemble C und Ensemble D, 930, 932, 934, 936 von einem Satelliten auf verschiedenen Frequenzen abgestrahlt werden, wie aus der ersten Frequenzdarstellung 910 ersichtlich ist.

Für einen Satellitenempfänger sind alle Signale, das heißt die Signale von allen Ensembles, verfügbar, vorausgesetzt, die Sendeleistung des Satelliten ist groß genug und der Empfänger ist für den Empfang des dem jeweiligen Ensemble zuordneten Frequenzbereichs ausgelegt.

Ferner werden bevorzugter Weise in ausgewählten Regionen, (z. B. in großen Städten) einzelne Ensembles auch terrestrisch abgestrahlt. So kann es beispielsweise aus medienrechtlichen Gründen notwendig sein, dass nur einzelne Ensembles abgestrahlt werden. Im übrigen kann es auch lediglich der Kostenreduktion dienen, dass nur einzelne Ensembles abgestrahlt werden. Bei dem gezeigten Beispiel werden die deutschsprachigen und die englischsprachigen Programme (das heißt, das Ensemble A 930 und das Ensemble D 936) für eine terrestrische Abstrahlung ausgewählt, wie auch aus zweiten Frequenzdarstellung 920 für die terrestrischen Signale ersichtlich ist. Dem terrestrischen Signal wird bei jedem Ensemble ein Overlay-Signal hinzugefügt. Die Overlay-Signale sind hier mit 940 und 942 gekennzeichnet. Die Amplitude des Oberlay-Signals ist sehr gering und kann beispielsweise 14 dB unter der Signalstärke des Basisschicht-Signals liegen. Mit anderen Worten, die von dem Satelliten ausgestrahlten Ensembles werden in der Basisschicht einer hierarchischen Modulation übertragen, und der Basisschicht der hierarchischen Modulation wird ein Ergänzungssignal (Overlay-Signal) hinzugefügt, das beispielsweise um 14 dB schwächer ist als das Signal der Basisschicht.

Für das Erweiterungssignal (Overlay-Signal) wird bevorzugt eine sehr niedrige Coderate verwendet. Beispielsweise beträgt die Code-Rate für das Erweiterungssignal (Overlay-Signal) 0,1, während die Code-Rate für das Basisschicht-Signal (base-layer-Signal) 1/2 beträgt. Damit ergibt sich für das Erweiterungssignal (overlay-Signal) eine vergleichbare Reichweite (wie für das Basisschicht-Signal, base-layer-Signal). Die Datenrate des Erweiterungssignals (Overlay-Signals) beträgt also ca. 15 % der Datenrate des Basisschicht-Signals (base-layer-Signals). Unter der Annahme, dass ein Satellitensignal beispielsweise 50 Programme (z.B. Radioprogramme oder Fernsehprogramme) zur Verfügung stellt, könnten (durch die Verwendung des Erweiterungssignals) bei dem beschriebenen Beispiel sieben regionale Programme (die von einer lokalen Datenquelle stammen) ergänzt werden. Ferner wird darauf hingewiesen, dass die regionalen Programme in jeder Region unterschiedlich sein können.

Zusammenfassend lässt sich also festhalten, dass es das Ziel der vorliegenden Erfindung ist, ein satellitengestütztes System zu schaffen, das aufbauend auf den Vorteilen des Hybridansatzes entsprechend dem EU147-DAB-System die Flexibilität für eine regionale terrestrische Versorgung erhöht. Die entsprechende Systemarchitektur wurde anhand der Figuren ausführlich dargestellt. Das System kann wie folgt kurz beschrieben werden:
- Eine Bodenstation sendet eine Multiplex von Signalen (z.B. Rundfunkprogrammen) zu einem Satelliten.
- Die Bodenstation sendet zwei Signale zu einem Satelliten oder zu mehreren Satelliten. Ein erstes Signal (Sig A) wird für den direkten Empfang durch mobile oder portable Empfänger vorgesehen. Ein zweites Signal (Sig B) ist für eine Zuspielung der Signale zu terrestrischen Sendern vorgesehen.
- Damit der terrestrische Sender das Signal so abstrahlen kann, dass es bei einem mobilen Empfänger zeitgleich mit dem Satellitensignal ankommt, wird das erste Signal (Sig A) von der Bodenstation mit einer geringen Verzögerung (z.B. wenige ms) gesendet.
- Der terrestrische Sender enthält einen Satellitenempfänger und einen terrestrischen Modulator.
- Der terrestrische Modulator unterstützt eine hierarchische Modulation, wobei die hierarchische Modulation eine Basisschicht (base-layer, BL) und eine Erweiterungsschicht (overlay-layer, OL) zur Verfügung stellt. Entsprechend verfügt der Modulator über zwei Eingänge. Über einen ersten Eingang des Modulators werden die Daten für die Basisschicht (base-layer, BL) angelegt. Über einen zweiten Eingang werden die Daten für das Überlagerungsschicht-Signal (overlay-signal, OL) angelegt.
- Die Basisschicht (base-layer BL) wird für eine terrestrische Abstrahlung des Satellitensignals verwendet. Dazu enthält der Repeater (also z.B. die terrestrische Sendestation) einen Satellitenempfänger. Der Ausgang des Satellitenempfängers wird mit dem Eingang "BL" (Basischicht-Eingang) des Modulators verbunden. An den zweiten Eingang des Modulators kann ein von der Basisschicht (base-layer BL) unabhängiges Signal angelegt werden.
- Der Modulator erzeugt aus den beiden Signalen ein hierarchisch moduliertes Signal. Eine mögliche Realisierungsform ist die Non-Uniform-constellation entsprechend dem DVB-T-Standard.
- In der Regel wird sowohl für die Basisschicht (base-layer, BL) als auch für die Erweiterungsschicht (overlay-layer, OL) ein fehlerkorrigierender Code verwendet. Über eine Coderate kann der erforderliche Störabstand eingestellt werden.
- Die Coderate für die Erweiterungsschicht OL kann unabhängig von der Coderate der Basisschicht BL gewählt werden.
- Wird für die Erweiterungsschicht OL eine deutlich niedrigere Coderate gewählt (als für die Basisschicht) so kann beispielsweise erreicht werden, dass die Reichweite des Erweiterungsschicht-Signals (OL-Signals) weitgehend identisch mit der Reichweite des Basisschicht-Signals (BL-Signals) ist.

Somit kann festgehalten werden, dass die Erfindung durch die folgenden Merkmale gekennzeichnet ist:
- Es wird mindestens ein Signal von einem Satelliten abgestrahlt.
- Die terrestrischen Sender verwenden hierarchische Modulation.
- Die Basischicht (BL) wird für die terrestrische Abstrahlung des Satellitensignals verwendet.
- Dem Basisschicht-Signal (BL-Signal) wird ein Erweiterungsschicht-Signal (OL-Signal) hinzugefügt, das unabhängig von dem Satellitensignal ist.

Ferner wird es bevorzugt, dass für das terrestrische Signal und für das Satellitensignal die gleiche Trägerfrequenz und gleiche Modulationsarten verwendet werden. Beispielsweise können beide Signale eine OFDM-Modulation verwenden.

Ebenso ist es möglich, dass für das terrestrische Signal eine andere Trägerfrequenz (als für das Satellitensignal) verwendet wird. In diesem Fall kann die Modulation für das terrestrische und das Satellitensignal auch unterschiedlich sein.

Ferner wird es bevorzugt, für das Erweiterungssignal (overlay-Signal) einen besseren Fehlerschutz (z.B. eine niedrigere Coderate) zu verwenden, so dass dadurch die Reichweite des Overlay-Signals weitgehend identisch mit der des Basisschicht-Signals (base-layer-Signals) ist.

Weisen das terrestrische Signal und das Satellitensignal eine gleiche Trägerfrequenz auf, so wird bevorzugt eine OFDM-Modulation sowohl für das Satellitensignal als auch für das terrestrische Signal verwendet.

Wird hingegen für das terrestrische Signal eine andere Trägerfrequenz verwendet als für das Satellitensignal, so ist es möglich, die Signale der Basisschicht (BL-Signale) nur teilweise abzustrahlen oder teilweise durch andere Signale zu ersetzen. Mit anderen Worten, das Basisschichtsignal (baselayer-Signal) wird teilweise auch für regionale Programme verwendet.

In dem erfindungsgemäßen System können ferner zwei oder mehr Satelliten verwendet werden. Ein terrestrisches Signal verwendet bevorzugt die gleiche Trägerfrequenz und ggf. auch den gleichen Modulationstyp wie einer der Satelliten.

Weiterhin wird es bevorzugt, einen Empfänger (Receiver) zu verwenden, der ein Signal mit einer hierarchischen Modulation decodieren kann, wobei dem Basisschicht-Signal ein Erweiterungssignal (overlay-Signal, OL-Signal) hinzugefügt ist, welches unhängig von dem Basisschicht-Signal ist. Weiterhin wird es bevorzugt, dass ein erfindungsgemäßer Empfänger gleichzeitig das Basisschicht-Signal und das Erweiterungsschicht-Signal decodieren kann.

Die vorliegende Erfindung schafft also ein satellitengestütztes und auf einer hierarchischen Modulation basiertes Rundfunksystem, dass es in effizienter Weise ermöglicht, mit Hilfe von terrestrischen Sendestationen lokale Informationsinhalte zu einem global von einem Satelliten ausgestrahlten Signal hinzuzufügen.

Abhängig von den Gegebenheiten können die erfindungsgemäßen Verfahren in Hardware oder in Software implementiert werden. Die Implementation kann auf einem digitalen Speichermedium, insbesondere Diskette oder CD oder DVD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computer-Programm-Produkt mit auf einem maschinenlesbaren Träger gespeichertem Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

## Patentansprüche

1. Rundfunksystem (400; 500) mit folgenden Merkmalen:
einer ersten terrestrischen Sendestation (100; 420, 430; 530; 700) zum Aussenden eines ersten terrestrischen Sendesignals, mit einem zugehörigen ersten Empfänger (310; 710) zum Empfangen eines 1.Sendesignals (594), um ein erstes Empfangssignal zu erhalten, einem zugehörigen zweiten Empfänger zum Empfangen eines ersten lokalen Signals (460, 470), um ein Lokal-Empfangssignal zu erhalten, einem Signal-Kombinierer zum Kombinieren des ersten Empfangssignals mit dem Lokal-Empfangssignal, um ein Kombinationssignal zu bilden, wobei der Signalkombinierer ausgebildet ist, um das Kombinationssignal so zu erzeugen, dass das Kombinationssignal gemäß einer hierarchischen Modulation gebildet ist, wobei das erste Empfangssignal in einer Basisschicht der hierarchischen Modulation enthalten ist, und wobei das Lokal-Empfangssignal in einer Erweiterungsschicht der hierarchischen Modulation enthalten ist, und einem Sender zum Aussenden des ersten Kombinationssignals als das erste terrestrische Sendesignal; und
einer zweiten terrestrischen Sendestation (430) zum Aussenden eines zweiten terrestrischen Rundfunksignals, mit einem zugehörigen ersten Empfänger (310; 710) zum Empfangen des ersten Sendesignals (594), um ein zugehöriges Empfangssignal zu erhalten, einem zugehörigen zweiten Empfänger zum Empfangen eines zweiten lokalen Signals (460, 470), um ein zugehöriges Lokal-Empfangssignal zu erhalten, einem zugehörigen Signal-Kombinierer zum Kombinieren des Empfangssignals mit dem zugehörigen Lokal-Empfangssignal, um ein zugehöriges Kombinationssignal zu bilden, wobei der Signalkombinierer ausgebildet ist, um das zugehörige Kombinationssignal so zu erzeugen, dass das zugehörige Kombinationssignal gemäß einer hierarchischen Modulation gebildet ist, wobei das zugehörige Empfangssignal in einer Basisschicht der hierarchischen Modulation enthalten ist, und wobei das zugehörige Lokal-Empfangssignal in einer Erweiterungsschicht der hierarchischen Modulation enthalten ist, und einem zugehörigen Sender zum Aussenden des zugehörigen Kombinationssignals als das zweite terrestrische Sendesignal,
wobei die erste terrestrische Sendestation (420) und die zweite terrestrische Sendestation (430) ausgelegt sind, um unterschiedliche lokale Signale (460, 470) zu empfangen, und wobei das erste lokale Signal sich von dem zweiten lokalen Signal unterscheidet;
wobei die erste terrestrische Sendestation (420) und die zweite terrestrische Sendestation (430) so ausgelegt sind, dass das von der ersten terrestrischen Sendestation abgestrahlte Kombinationssignal und das von der zweiten terrestrischen Sendestation ausgestrahlte Kombinationssignal eine gleiche Trägerfrequenz und eine gleiche Modulationsart aufweisen;
wobei die erste terrestrische Sendestation und die zweite terrestrische Sendestation ferner so ausgelegt oder angeordnet sind, dass ein Überlappungsgebiet besteht, in dem sich das von der ersten terrestrischen Sendestation abgestrahlte Kombinationssignal und das von der zweiten terrestrischen Sendestation abgestrahlte Kombinationssignal hinsichtlich der Basisschicht der hierarchischen Modulation konstruktiv überlagern;
wobei die Trägerfrequenz der von den terrestrischen Sendestationen abgestrahlten Kombinationssignale gleich einer Trägerfrequenz eines zweiten Sendesignals, das ein Satellitensignal ist, und das in dem Überlappungsgebiet empfangbar ist, ist;
wobei das erste Sendesignal (594) einen Nutzdateninhalt aufweist, der einen Nutzdateninhalt des zweiten Sendesignals umfasst;
wobei eine in der Basisschicht des von der ersten terrestrischen Sendestation (420) ausgestrahlten Signals enthaltene Information gleich einer in der Basisschicht des zweiten Sendesignals (596) enthaltenen Information ist; und
wobei die Basisschicht der hierarchischen Modulation des zweiten Sendesignals gleich der Basisschicht der hierarchischen Modulation des von der zweiten terrestrischen Sendestation (430) ausgestrahlten Kombinationssignals ist.

2. Rundfunksystem (400; 500) gemäß Anspruch 1, das ferner einen Satelliten und eine Satelliten-Basisstation (510) umfasst,
wobei die Satelliten-Basisstation ausgelegt ist, um ein erstes Basisstation-Signal (590) zu dem Satelliten (520) zu senden,
wobei der Satellit (520) ausgelegt ist, um das erste Basisstation-Signal (590) als ein erstes Satellitensignal (594) weiterzuleiten, und um ein zweites Satellitensignal (596) zu bilden, das gegenüber dem ersten Satellitensignal (594) um eine vorgegebene Verzögerungszeit verzögert ist;
wobei das erste Satellitensignal das erste Sendesignal bildet; und
wobei das zweite Satellitensignal das zweite Sendesignal bildet.

3. Rundfunksystem (400,500) gemäß Anspruch 1, das ferner eine Satelliten-Basisstation (510) aufweist, die ausgelegt ist, um ein erstes Basisstationssignal (590) und ein zweites Basisstationssignal (592) an den Satelliten zu schicken,
wobei der Satellit (520) ausgelegt ist, um das erste Basisstationssignal (590) als ein erstes Satellitensignal (594) weiterzuleiten und um das zweite Basisstationssignal (592) als ein zweites Satellitensignal (596) weiterzuleiten,
wobei die Satellitenbasisstation (510) und der Satellit (520) so ausgelegt sind, dass das erste Satellitensignal einen Nutzdateninhalt aufweist, der einen Nutzdateninhalt des zweiten Satellitensignals umfasst, und dass das zweite Satellitensignal (596) gegenüber dem ersten Satellitensignal um eine vorgegebene Verzögerungszeit verzögert ist;
wobei das erste Satellitensignal das erste Sendesignal bildet; und
wobei das zweite Satellitensignal das zweite Sendesignal bildet.

4. Rundfunksystem (400,500) gemäß Anspruch 3, das so ausgelegt ist, dass das erste Satellitensignal (594) und das zweite Satellitensignal (596) den gleichen Nutzdateninhalt aufweisen.

5. Rundfunksystem gemäß einem der Ansprüche 2 bis 4, bei dem der Satellit (520) so ausgelegt ist, dass das zweite Satellitensignal (596) eine größere Signalstärke als das erste Satellitensignal (594) aufweist.

6. Rundfunksystem gemäß einem der Ansprüche 1 bis 5, bei der der erste Empfänger der ersten terrestrischen Sendestation (420) ausgelegt ist, um das erste Satellitensignal (594) zu empfangen, und bei dem der erste Empfänger der zweiten terrestrischen Sendestation (430) ausgelegt ist, um das erste Satellitensignal (594) zu empfangen.

7. Rundfunksystem gemäß einem der Ansprüche 1 bis 6, bei dem die Satelliten-Basisstation (510) und der Satellit (520) so ausgelegt sind, dass das zweite Satellitensignal (596) eine Information nur in einer Basisschicht der hierarchischen Modulation enthält.

8. Rundfunksystem (400;500) gemäß einem der Ansprüche 1 bis 7, bei dem die Satelliten-Bodenstation (510) und der Satellit (520) so ausgelegt sind, dass eine in der Basisschicht des von der ersten terrestrischen Sendestation (420) ausgestrahlten Signals enthaltene Information gleich einer in der Basisschicht des zweiten Satellitensignals (596) enthaltenen Information ist.

9. Rundfunksystem (400;500) gemäß einem der Ansprüche 1 bis 8, das ferner einen zweiten Satelliten umfasst.

10. Rundfunksystem (400;500) gemäß einem der Ansprüche 1 bis 9, bei dem die Modulationsart der von den terrestrischen Sendestationen abgestrahlten Kombinationssignale im Hinblick auf die Basisschicht der hierarchischen Modulation gleich der Modulationsart des zweiten Sendesignals ist.

11. Rundfunksystem (400; 500) mit folgenden Merkmalen:
einem 1. Sender (410; 520), der ausgelegt ist, um ein 1. Sendesignal (594, 596) abzustrahlen; und
einer ersten terrestrischen Sendestation (100; 420, 430; 530; 700) zum Aussenden eines ersten terrestrischen Sendesignals, mit einem ersten Empfänger (310; 710) zum Empfangen des 1. Sendesignals (594), um ein erstes Empfangssignal zu erhalten, einem zweiten Empfänger zum Empfangen eines ersten lokalen Signals (460, 470), um ein Lokal-Empfangssignal zu erhalten, einem Signal-Kombinierer zum Kombinieren des ersten Empfangssignals mit dem Lokal-Empfangssignal, um ein Kombinationssignal zu bilden, wobei der Signalkombinierer ausgebildet ist, um das Kombinationssignal so zu erzeugen, dass das Kombinationssignal gemäß einer hierarchischen Modulation gebildet ist, wobei das erste Empfangssignal in einer Basisschicht der hierarchischen Modulation enthalten ist, und wobei das Lokal-Empfangssignal in einer Erweiterungsschicht der hierarchischen Modulation enthalten ist, und einem Sender zum Aussenden des ersten Kombinationssignals als das erste terrestrische Sendesignal.

12. Rundfunksystem (400; 500) gemäß Anspruch 11, das ferner eine zweite terrestrische Sendestation (430) zum Aussenden eines zweiten terrestrischen Rundfunksignals mit einem zugehörigen ersten Empfänger (310; 710) zum Empfangen des Satellitensignals (594), um ein zugehöriges Satelliten-Empfangssignal zu erhalten, einem zugehörigen zweiten Empfänger zum Empfangen eines zweiten lokalen Signals (460, 470), um ein zugehöriges Lokal-Empfangssignal zu erhalten, einem zugehörigen Signal-Kombinierer zum Kombinieren des Satelliten-Empfangssignals mit dem zugehörigen Lokal-Empfangssignal, um ein zugehöriges Kombinationssignal zu bilden, wobei der Signalkombinierer ausgebildet ist, um das zugehörige Kombinationssignal so zu erzeugen, dass das zugehörige Kombinationssignal gemäß einer hierarchischen Modulation gebildet ist, wobei das zugehörige Satellitenempfangssignal in einer Basisschicht der hierarchischen Modulation enthalten ist, und wobei das zugehörige Lokal-Empfangssignal in einer Erweiterungsschicht der hierarchischen Modulation enthalten ist, und einem zugehörigen Sender zum Aussenden des zugehörigen Kombinationssignals als das zweite terrestrische Sendesignal, umfasst,
wobei die erste terrestrische Sendestation (420) und die zweite terrestrische Sendestation (430) ausgelegt sind, um unterschiedliche lokale Signale (460, 470) zu empfangen.

13. Rundfunksystem (400; 500) gemäß Anspruch 11 oder 12, das ferner eine Satelliten-Basisstation (510) umfasst, die ausgelegt ist, um ein erstes Basisstation-Signal (590) zu dem Satelliten (520) zu senden,
wobei der Satellit (520) ausgelegt ist, um das erste Basisstation-Signal (590) als ein erstes Satellitensignal (594) weiterzuleiten, und um ein zweites Satellitensignal (596) zu bilden, das gegenüber dem ersten Satellitensignal (594) um eine vorgegebene Verzögerungszeit verzögert ist.

14. Rundfunksystem (400,500) gemäß Anspruch 11 oder 12, das ferner eine Satelliten-Basisstation (510) aufweist, die ausgelegt ist, um ein erstes Basisstationssignal (590) und ein zweites Basisstationssignal (592) an den Satelliten zu schicken,
wobei der Satellit (520) ausgelegt ist, um das erste Basisstationssignal (590) als ein erstes Satellitensignal (594) weiterzuleiten und um das zweite Basisstationssignal (592) als ein zweites Satellitensignal (596) weiterzuleiten,
wobei die Satellitenbasisstation (510) und der Satellit (520) so ausgelegt sind, dass das erste Satellitensignal einen Nutzdateninhalt aufweist, der einen Nutzdateninhalt des zweiten Satellitensignals umfasst, und dass das zweite Satellitensignal (596) gegenüber dem ersten Satellitensignal um eine vorgegebene Verzögerungszeit verzögert ist.

15. Rundfunksystem (400,500) gemäß Anspruch 14, das so ausgelegt ist, dass das erste Satellitensignal (594) und das zweite Satellitensignal (596) den gleichen Nutzdateninhalt aufweisen.

16. Rundfunksystem gemäß einem der Ansprüche 13 bis 15, bei dem der Satellit (520) so ausgelegt ist, dass das zweite Satellitensignal (596) eine größere Signalstärke als das erste Satellitensignal (594) aufweist.

17. Rundfunksystem gemäß einem der Ansprüche 11 bis 16, bei der der erste Empfänger der ersten terrestrischen Sendestation (420) ausgelegt ist, um das erste Satellitensignal (594) zu empfangen, und bei dem der erste Empfänger der zweiten terrestrischen Sendestation (430) ausgelegt ist, um das erste Satellitensignal (594) zu empfangen.

18. Rundfunksystem (400; 500) gemäß einem der Ansprüche 11 bis 17, bei der die erste terrestrische Sendestation (420), die zweite terrestrische Sendestation (430) und der Satellit (410; 520) so ausgelegt sind, dass das zweite Satellitensignal (596), das von der ersten terrestrischen Sendestation abgestrahlte Kombinationssignal und das von der zweiten terrestrischen Sendestation ausgestrahlte Kombinationssignal eine gleiche Trägerfrequenz und eine gleiche Modulationsart aufweisen.

19. Rundfunksystem gemäß einem der Ansprüche11 bis 18, bei dem die Satelliten-Basisstation (510) und der Satellit (520) so ausgelegt sind, dass das zweite Satellitensignal (596) eine Information nur in einer Basisschicht der hierarchischen Modulation enthält.

20. Rundfunksystem (400;500) gemäß einem der Ansprüche 11 bis 19, bei dem die Satelliten-Bodenstation (510) und der Satellit (520) so ausgelegt sind, dass eine in der Basisschicht des von der ersten terrestrischen Sendestation (420) ausgestrahlten Signals enthaltene Information gleich einer in der Basisschicht des zweiten Satellitensignals (596) enthaltenen Information ist.

21. Rundfunksystem (400;500) gemäß einem der Ansprüche 11 bis 20, wobei das Satellitengestützte Rundfunksystem so ausgelegt ist, dass die Basisschicht der hierarchischen Modulation des zweiten Satellitensignals (596) gleich der Basisschicht der hierarchischen Modulation und des von der ersten terrestrischen Sendestation ausgestrahlten Kombinationssignals ist.

22. Rundfunksystem (400; 500) gemäß einem der Ansprüche 11 bis 21, das ferner so ausgelegt ist, dass die Basisschicht der hierarchischen Modulation des zweiten Satellitensignals gleich der Basisschicht der hierarchischen Modulation des von der zweiten terrestrischen Sendestation (430) ausgestrahlten Kombinationssignals ist.

23. Rundfunksystem (400;500) gemäß einem der Ansprüche 11 bis 22, das ferner einen zweiten Satelliten umfasst.

24. Rundfunksystem (400;500) gemäß einem der Ansprüche 11 bis 23, bei dem Trägerfrequenzen des von der ersten terrestrischen Sendestation abgestrahlten Kombinationssignals und des von der zweiten terrestrischen Sendestation abgestrahlten Kombinationssignals gleich sind,
wobei das erste lokale Signal sich von dem zweiten lokalen Signal unterscheidet, und
wobei die erste terrestrische Sendestation und die zweite terrestrische Sendestation ferner so angeordnet sind, dass ein Überlappungsgebiet besteht, in dem sich das von der ersten terrestrischen Sendestation abgestrahlte Kombinationssignal und das von der zweiten terrestrischen Sendestation abgestrahlte Kombinationssignal überlagern.

## Claims

1. A broadcast system (400; 500), comprising:
a first terrestrial transmitting station (100; 420, 430; 530; 700) for sending out a first terrestrial transmit signal, having an associated first receiver (310; 710) for receiving a first transmit signal (594) to obtain a first receive signal, an associated second receiver for receiving a first local signal (460, 470) to obtain a local receive signal, a signal combiner for combining the first receive signal with the local receive signal to form a combination signal, wherein the signal combiner is implemented to generate the combination signal so that the combination signal is formed according to a hierarchical modulation, wherein the first receive signal is contained in a base layer of the hierarchical modulation, and wherein the local receive signal is contained in an overlay layer of the hierarchical modulation, and a transmitter for sending out the first combination signal as the first terrestrial transmit signal; and
a second terrestrial transmitting station (430) for sending out a second terrestrial broadcast signal, having an associated first receiver (310; 710) for receiving the first transmit signal (594) to obtain an associated receive signal, an associated second receiver for receiving a second local signal (460, 470), to obtain an associated local receive signal, an associated signal combiner for combining the receive signal with the associated local receive signal to form an associated combination signal, wherein the signal combiner is implemented to generate the associated combination signal so that the associated combination signal is formed according to a hierarchical modulation, wherein the associated receive signal is contained in a base layer of the hierarchical modulation, and wherein the associated local receive signal is contained in an overlay layer of the hierarchical modulation, and an associated transmitter for sending out the associated combination signal as the second terrestrial transmit signal,
wherein the first terrestrial transmitting station (420) and the second terrestrial transmitting station (430) are implemented to receive different local signals (460, 470), and wherein the first local signal is different from the second local signal;
wherein the first terrestrial transmitting station (420) and the second terrestrial transmitting station (430) are implemented so that the combination signal emitted from the first terrestrial transmitting station and the combination signal emitted from the second terrestrial transmitting station comprise an equal carrier frequency and an equal modulation type;
wherein the first terrestrial transmitting station and the second terrestrial transmitting station are further implemented or arranged so that an overlapping area exists in which the combination signal emitted from the first terrestrial transmitting station and the combination signal emitted from the second terrestrial transmitting station constructively overlap regarding the base layer of the hierarchical modulation;
wherein the carrier frequency of the combination signals emitted from the terrestrial transmitting station is equal to a carrier frequency of a second transmit signal which is a satellite signal and which is receivable in the overlapping area;
wherein the first transmit signal (594) comprises a payload data content including a payload data content of the second transmit signal;
wherein an information contained in the base layer of the signal emitted from the first terrestrial transmitting station (420) is equal to an information contained in the base layer of the second transmit signal (596); and
wherein the base layer of the hierarchical modulation of the second transmit signal is equal to the base layer of the hierarchical modulation of the combination signal emitted from the second terrestrial transmitting station (430).

2. The broadcast system (400; 500) according to claim 1, further including a satellite and a satellite base station (510),
wherein the satellite base station is implemented to transmit a first base station signal (590) to the satellite (520),
wherein the satellite (520) is implemented to pass on the first base station signal (590) as a first satellite signal (594) as to form a second satellite signal (596) which is delayed compared to the first satellite signal (594) by a predetermined delay time;
wherein the first satellite signal forms the first transmit signal; and
wherein the second satellite signal forms the second transmit signal.

3. A broadcast system (400, 500) according to claim 1, further comprising a satellite base station (510) which is implemented to send a first base station signal (590) and a second base station signal (592) to the satellite,
wherein the satellite (520) is implemented to pass on the first base station signal (590) as a first satellite signal (594) and to pass on the second base station signal (592) as a second satellite signal (596),
wherein the satellite base station (510) and the satellite (520) are implemented so that the first satellite signal comprises a payload data content which includes a payload data content of the second satellite signal, and that the second satellite signal (596) is delayed compared to the first satellite signal by a predetermined delay time;
wherein the first satellite signal forms the first transmit signal; and
wherein the second satellite signal forms the second transmit signal.

4. The broadcast system (400, 500) according to claim 3, which is implemented so that the first satellite signal (594) and the second satellite signal (596) comprise the same payload data content.

5. The broadcast system according to one of claims 2 to 4, wherein the satellite (520) is implemented so that the second satellite signal (596) comprises a greater signal strength than the first satellite signal (594).

6. The broadcast system according to one of claims 1 to 5, wherein the first receiver of the first terrestrial transmitting station (420) is implemented to receive the first satellite signal (594), and wherein the first receiver of the second terrestrial transmitting station (430) is implemented to receive the first satellite signal (594).

7. The broadcast system according to one of claims 1 to 6, wherein the satellite base station (510) and the satellite (520) are implemented so that the second satellite signal (596) contains an information only in a base layer of the hierarchical modulation.

8. The broadcast system (400; 500) according to one of claims 1 to 7, wherein the satellite ground station (510) and the satellite (520) are implemented so that an information contained in the base layer of the signal emitted from the first terrestrial transmitting station (420) is equal to an information contained in the base layer of the second satellite signal (596).

9. The broadcast system (400; 500) according to one of claims 1 to 8, further including a second satellite.

10. The broadcast system (400; 500) according to one of claims 1 to 9, wherein the modulation type of the combination signal emitted from the terrestrial transmitting station is equal to the modulation type of the second signal regarding the base layer of the hierarchical modulation.

11. A broadcast system (400; 500), comprising:
a first transmitter (410; 520) which is implemented to send out a first transmit signal (594, 596); and
a first terrestrial transmitting station (100; 420, 430; 530; 700) for sending out a first terrestrial transmit signal, having a first receiver (310; 710) for receiving the first transmit signal (594) to obtain a first receive signal, a second receiver for receiving a first local signal (460, 470) to obtain a local receive signal, a signal combiner for combining the first receive signal with the local receive signal to form a combination signal, wherein the signal combiner is implemented to generate the combination signal so that the combination signal is formed according to a hierarchical modulation, wherein the first receive signal is contained in a base layer of the hierarchical modulation, and wherein the local receive signal is contained in a overlay layer of the hierarchical modulation, and a transmitter for sending out the first combination signal as the first terrestrial transmit signal.

12. The broadcast system (400; 500) according to claim 11, further including a second terrestrial transmitting station (430) for sending out a second terrestrial broadcast signal having an associated first receiver (310; 710) for receiving the satellite signal (594) to obtain an associated satellite receive signal, an associated second receiver for receiving a second local signal (460, 470) to obtain an associated local receive signal, an associated signal combiner for combining the satellite receive signal with the associated local receive signal to form an associated combination signal, wherein the signal combiner is implemented to generate the associated combination signal so that the associated combination signal is formed according to an hierarchical modulation,
wherein the associated satellite receive signal is contained in a base layer of the hierarchical modulation and wherein the associated local receive signal is contained in an overlay layer of the hierarchical modulation, and an associated transmitter for sending out the associated combination signal as the second terrestrial transmit signal,
wherein the first terrestrial transmitting station (420) and the second terrestrial transmitting station (430) are implemented to receive different local signals (460, 470).

13. The broadcast system (400; 500) according to claim 11 or 12, further including a satellite base station (510) which is implemented to send a first base station signal (590) to the satellite (520),
wherein the satellite (520) is implemented to pass on the first base station signal (590) as a first satellite signal (594) and to form a second satellite signal (596) which is delayed compared to the first satellite signal (594) by a predetermined delay time.

14. The broadcast system (400, 500) according to claim 11 or 12, further comprising a satellite base station (510) which is implemented to send a first base station signal (590) and a second base station signal (592) to the satellite,
wherein the satellite (520) is implemented to pass on the first base station signal (590) as a first satellite signal (594) and to pass on the second base station signal (592) as a second satellite signal (596),
wherein the satellite base station (510) and the satellite (520) are implemented so that the first satellite signal comprises a payload data content which includes a payload data content of the second satellite signal, and that the second satellite signal (596) is delayed compared to the first satellite signal by a predetermined delay time.

15. The broadcast system (400, 500) according to claim 14, which is implemented so that the first satellite signal (594) and the second satellite signal (596) comprise the same payload data content.

16. The broadcast system according to one of claims 13 to 15, wherein the satellite (520) is implemented so that the second satellite signal (596) comprises a greater signal strength than the first satellite signal (594).

17. The broadcast system according to one of claims 11 to 16, wherein the first receiver of the first terrestrial transmitting station (420) is implemented to receive the first satellite signal (594) and
wherein the first receiver of the second terrestrial transmitting station (430) is implemented to receive the first satellite signal (594).

18. The broadcast system (400; 500) according to one of claims 11 to 17, wherein the first terrestrial transmitting station (420), the second terrestrial transmitting station (430) and the satellite (410; 520) are implemented so that the second satellite signal (596), the combination signal emitted from the first terrestrial transmitting station and the combination signal emitted from the second terrestrial transmitting station comprise an equal carrier frequency and an equal modulation type.

19. The broadcast system according to one of claims 11 to 18, wherein the satellite base station (510) and the satellite (520) are implemented so that the second satellite signal (596) contains an information only in a base layer of the hierarchical modulation.

20. The broadcast system (400; 500) according to one of claims 11 to 19, wherein the satellite ground station (510) and the satellite (520) are implemented so that an information contained in the base layer of the signal emitted from the first terrestrial transmitting station (420) is equal to an information contained in the base layer of the second satellite signal (596).

21. The broadcast system (400, 500) according to one of claims 11 to 20, wherein the satellite-aided broadcast system is implemented so that the base layer of the hierarchical modulation of the second satellite signal (596) is equal to the base layer of the hierarchical modulation and the combination signal emitted from the first terrestrial transmitting station.

22. The broadcast system (400; 500) according to one of claims 11 to 21, which is further implemented so that the base layer of the hierarchical modulation of the second satellite signal is equal to the base layer of the hierarchical modulation of the combination signal emitted from the second terrestrial transmitting station (430).

23. The broadcast system (400; 500) according to one of claims 11 to 22, further including a second satellite.

24. The broadcast system (400; 500) according to one of claims 11 to 23, wherein the carrier frequencies of the combination signal emitted from the first terrestrial transmitting station and the combination signal emitted from the second terrestrial transmitting station are equal,
wherein the first local signal is different from the second local signal, and
wherein the first terrestrial transmitting station and the second terrestrial transmitting station are further arranged so that an overlapping area exists in which the combination signal emitted from the first terrestrial transmitting station and the combination signal emitted from the second terrestrial transmitting station overlap.

## Revendications

1. Système de radiodiffusion (400; 500), aux caractéristiques suivantes:
une première station émettrice terrestre (100; 420, 430; 530; 700) destinée à émettre un premier signal d'émission terrestre, avec un premier récepteur (310; 710) associé destiné à recevoir un premier signal d'émission (594), pour obtenir un premier signal de réception, un deuxième récepteur associé destiné à recevoir un premier signal local (460, 470), un combineur de signaux destiné à combiner le premier signal de réception avec le signal de réception local, pour former un signal de combinaison, le combineur de signaux étant réalisé de manière à générer le signal de combinaison de sorte que le signal de combinaison soit formé selon une modulation hiérarchique, le premier signal de réception étant contenu dans une couche de base de la modulation hiérarchique, et le signal de réception local étant contenu dans une couche d'ampliation de la modulation hiérarchique, et un émetteur destiné à émettre le premier signal de combinaison comme premier signal d'émission terrestre; et
une deuxième station émettrice terrestre (430) destinée à émettre un deuxième signal de radiodiffusion terrestre, avec un premier récepteur (310; 710) associé destiné à recevoir le premier signal d'émission (594), pour obtenir un signal de réception associé, un deuxième récepteur associé destiné à recevoir un deuxième signal local (460, 470), pour obtenir un signal de réception local associé, un combineur de signaux associé destiné à combiner le signal de réception avec le signal de réception local associé, pour former un signal de combinaison associé, le combineur de signaux étant réalisé de manière à générer le signal de combinaison associé de sorte que le signal de combinaison associé soit formé selon une modulation hiérarchique, le signal de réception associé étant contenu dans une couche de base de la modulation hiérarchique, et le signal de réception local associé étant contenu dans une couche d'ampliation de la modulation hiérarchique, et un émetteur associé destiné à émettre le signal de combinaison associé comme deuxième signal d'émission terrestre,
la première station émettrice terrestre (420) et la deuxième station émettrice terrestre (430) étant réalisées de manière à recevoir différents signaux locaux (460, 470), et le premier signal local différant du deuxième signal local;
la première station émettrice terrestre (420) et la deuxième station émettrice terrestre (430) étant réalisées de sorte que le signal de combinaison émis par la première station émettrice terrestre et le signal de combinaison émis par la deuxième station émettrice terrestre présentent une même fréquence porteuse et un même type de modulation;
la première station émettrice terrestre et la deuxième station émettrice terrestre étant, par ailleurs réalisées ou disposées de sorte qu'il existe une zone de chevauchement dans laquelle le signal de combinaison émis par la première station émettrice terrestre et le signal de combinaison émis par la deuxième station émettrice terrestre se chevauchent de manière constructive en ce qui concerne la couche de base de la modulation hiérarchique;
la fréquence porteuse des signaux de combinaison émis par les stations émettrices terrestres étant identique à une fréquence porteuse d'un deuxième signal d'émission, qui est un signal de satellite et qui peut être reçu dans la zone de chevauchement;
le premier signal d'émission (594) présentant un contenu de données utiles comprenant un contenu de données utiles du deuxième signal d'émission;
une information contenue dans la couche de base du signal émis par la première station émettrice terrestre (420) étant identique à une information contenue dans la couche de base du deuxième signal d'émission (596); et
la couche de base de la modulation hiérarchique du deuxième signal d'émission étant identique à la couche de base de la modulation hiérarchique du signal de combinaison émis par la deuxième station émettrice terrestre (430).

2. Système de radiodiffusion (400; 500) selon la revendication 1, comprenant par ailleurs un satellite et une station de base de satellite (510),
la station de base de satellite étant réalisée de manière à envoyer un premier signal de station de base (590) au satellite (520),
le satellite (520) étant réalisé de manière à transmettre le premier signal de station de base (590) comme premier signal de satellite (594), et à former un deuxième signal de satellite (596) qui est retardé, par rapport au premier signal de satellite (594), d'un temps de retard prédéterminé;
le premier signal de satellite constituant le premier signal d'émission; et
le deuxième signal de satellite constituant le deuxième signal d'émission.

3. Système de radiodiffusion (400, 500) selon la revendication 1, présentant par ailleurs une station de base de satellite (510) qui est réalisée de manière à envoyer un premier signal de station de base (590) et un deuxième signal de station de base (592) au satellite,
le satellite (520) étant réalisé de manière à transmettre le premier signal de station de base (590) comme premier signal de satellite (594) et à transmettre le deuxième signal de station de base (592) comme deuxième signal de satellite (596),
la station de base de satellite (510) et le satellite (520) étant réalisés de sorte que le premier signal de satellite présente un contenu de données utiles comprenant un contenu de données utiles du deuxième signal de satellite, et que le deuxième signal de satellite (596) soit retardé, par rapport au premier signal de satellite, d'un temps de retard prédéterminé;
le premier signal de satellite constituant le premier signal d'émission; et
le deuxième signal de satellite constituant le deuxième signal d'émission.

4. Système de radiodiffusion (400, 500) selon la revendication 3, réalisé de sorte que le premier signal de satellite (594) et le deuxième signal de satellite (596) présentent le même contenu de données utiles.

5. Système de radiodiffusion selon l'une des revendications 2 à 4, dans lequel le satellite (520) est réalisé de sorte que le deuxième signal de satellite (596) présente une plus grande intensité de signal que le premier signal de satellite (594).

6. Système de radiodiffusion selon l'une des revendications 1 à 5, dans lequel le premier récepteur de la première station émettrice terrestre (420) est réalisé de manière à recevoir le premier signal de satellite (594), et dans lequel le premier récepteur de la deuxième station émettrice terrestre (430) est réalisé de manière à recevoir le premier signal de satellite (594).

7. Système de radiodiffusion selon l'une des revendications 1 à 6, dans lequel la station de base de satellite (510) et le satellite (520) sont réalisés de sorte que le deuxième signal de satellite (596) contienne une information uniquement dans une couche de base de la modulation hiérarchique.

8. Système de radiodiffusion (400; 500) selon l'une des revendications 1 à 7, dans lequel la station de base de satellite (510) et le satellite (520) sont réalisés de sorte qu'une information contenue dans la couche de base du signal émis par la première station émettrice terrestre (420) soit identique à une information contenue dans la couche de base du deuxième signal de satellite (596).

9. Système de radiodiffusion (400; 500) selon l'une des revendications 1 à 8, comportant par ailleurs un deuxième satellite.

10. Système de radiodiffusion (400; 500) selon l'une des revendications 1 à 9, dans lequel le type de modulation des signaux de combinaison émis par les stations émettrices terrestres est, en ce qui concerne la couche de base de la modulation hiérarchique, identique au type de modulation du deuxième signal d'émission.

11. Système de radiodiffusion (400; 500), aux caractéristiques suivantes:
un premier émetteur (410; 520) qui est réalisé de manière à émettre un premier signal d'émission (594, 596); et
une première station émettrice terrestre (100; 420, 430; 530; 700) destinée à émettre un premier signal d'émission terrestre avec un premier récepteur (310; 710) destiné à recevoir le premier signal d'émission (594), pour obtenir un premier signal de réception, un deuxième récepteur destiné à recevoir un premier signal local (460, 470), pour obtenir un signal de réception local, un combineur de signaux destiné à combiner le premier signal de réception avec le signal de réception local, pour former un signal de combinaison, le combineur de signaux étant réalisé de manière à générer le signal de combinaison de sorte que le signal de combinaison soit formé selon une modulation hiérarchique, le premier signal de réception étant contenu dans une couche de base de la modulation hiérarchique, et le signal de réception local étant contenu dans une couche d'ampliation de la modulation hiérarchique, et un émetteur destiné à émettre le premier signal
de combinaison comme premier signal d'émission terrestre.

12. Système de radiodiffusion (400; 500) selon la revendication 11, comportant par ailleurs une deuxième station émettrice terrestre (430) destinée à émettre un deuxième signal de radiodiffusion terrestre avec un premier récepteur (310; 710) associé destiné à recevoir le signal de satellite (594), pour obtenir un signal de satellite associé, un deuxième récepteur associé destiné à recevoir un deuxième signal local (460, 470), pour obtenir un signal de réception local associé, un combineur de signaux associé destiné à combiner le signal de réception de satellite avec le signal de réception local associé, pour former un signal de combinaison associé, le combineur de signaux étant réalisé de manière à générer le signal de combinaison associé de sorte que le signal de combinaison associé soit formé selon une modulation hiérarchique, le signal de réception de satellite associé étant contenu dans une couche de base de la modulation hiérarchique, et le signal de réception local associé étant contenu dans une couche d'ampliation de la modulation hiérarchique, et un émetteur associé destiné à émettre le signal de combinaison associé comme deuxième signal d'émission terrestre,
la première station émettrice terrestre (420) et la deuxième station émettrice terrestre (430) étant réalisées de manière à recevoir des signaux locaux différents (460, 470).

13. Système de radiodiffusion (400; 500) selon la revendication 11 ou 12, comportant par ailleurs une station de base de satellite (510) qui est réalisée de manière à envoyer un premier signal de station de base (590) au satellite (520),
le satellite (520) étant réalisé de manière à transmettre le premier signal de station de base (590) comme premier signal de satellite (594), et à former un deuxième signal de satellite (596) qui est retardé, par rapport au premier signal de satellite (594), d'un temps de retard prédéterminé.

14. Système de radiodiffusion (400, 500) selon la revendication 11 ou 12, présentant par ailleurs une station de base de satellite (510) qui est réalisée de manière à envoyer un premier signal de station de base (590) et un deuxième signal de station de base (592) au satellite,
le satellite (520) étant réalisé de manière à transmettre le premier signal de station de base (590) comme premier signal de satellite (594) et à transmettre le deuxième signal de station de base (592) comme deuxième signal de satellite (596),
la station de base de satellite (510) et le satellite (520) étant réalisés de sorte que le premier signal de satellite présente un contenu de données utiles comprenant un contenu de données utiles du deuxième signal de satellite, et que le deuxième signal de satellite (596) soit retardé, par rapport au premier signal de satellite, d'un temps de retard prédéterminé.

15. Système de radiodiffusion (400, 500) selon la revendication 14, réalisé de sorte que le premier signal de satellite (594) et le deuxième signal de satellite (596) présentent le même contenu de données utiles.

16. Système de radiodiffusion selon l'une des revendications 13 à 15, dans lequel le satellite (520) est réalisé de sorte que le deuxième signal de satellite (596) présente une plus grande intensité de signal que le premier signal de satellite (594).

17. Système de radiodiffusion selon l'une des revendications 11 à 16, dans lequel le premier récepteur de la première station émettrice terrestre (420) est réalisé de manière à recevoir le premier signal de satellite (594), et dans lequel le premier récepteur de la deuxième station émettrice terrestre (430) est réalisé de manière à recevoir le premier signal de satellite (594).

18. Système de radiodiffusion (400; 500) selon l'une des revendications 11 à 17, dans lequel la première station émettrice terrestre (420), la deuxième station émettrice terrestre (430) et le satellite (410; 520) sont réalisés de sorte que le deuxième signal de satellite (596), le signal de combinaison émis par la première station émettrice terrestre et le signal de combinaison émis par la deuxième station émettrice terrestre présentent une même fréquence porteuse et un même type de modulation.

19. Système de radiodiffusion selon l'une des revendications 11 à 18, dans lequel la station de base de satellite (510) et le satellite (520) sont réalisés de sorte que le deuxième signal de satellite (596) contienne une information uniquement dans une couche de base de la modulation hiérarchique.

20. Système de radiodiffusion (400; 500) selon l'une des revendications 11 à 19, dans lequel la station de base de satellite (510) et le satellite (520) sont réalisés de sorte qu'une information contenue dans la couche de base du signal émis par la première station émettrice terrestre (420) soit identique à une information contenue dans la couche de base du deuxième signal de satellite (596).

21. Système de radiodiffusion (400; 500) selon l'une des revendications 11 à 20, le système de radiodiffusion assisté par satellite étant réalisé de sorte que la couche de base de la modulation hiérarchique du deuxième signal de satellite (596) soit identique à la couche de base de la modulation hiérarchique et au signal de combinaison émis par la première station émettrice terrestre.

22. Système de radiodiffusion (400; 500) selon l'une des revendications 11 à 21, réalisé par ailleurs de sorte que la couche de base de la modulation hiérarchique du deuxième signal de satellite soit identique à la couche de base de la modulation hiérarchique du signal de combinaison émis par la deuxième station émettrice terrestre (430).

23. Système de radiodiffusion (400; 500) selon l'une des revendications 11 à 22, comprenant par ailleurs un deuxième satellite.

24. Système de radiodiffusion (400; 500) selon l'une des revendications 11 à 23, dans lequel les fréquences porteuses du signal de combinaison émis par la première station émettrice terrestre et du signal de combinaison émis par la deuxième station émettrice terrestre sont identiques,
le premier signal local différant du deuxième signal local, et
la première station émettrice terrestre et la deuxième station émettrice terrestre étant, par ailleurs, disposées de sorte qu'il existe une zone de chevauchement dans laquelle le signal de combinaison émis par la première station émettrice terrestre et le signal de combinaison émis par la deuxième station émettrice terrestre se chevauchent.
